# EUROPEAN PATENT SPECIFICATION

(11) **EP 3 154 353 B1**
(45) Date of publication and mention of the grant of the patent: **05.06.2019**
(21) Application number: 15715977.3
(22) Date of filing: 27.03.2015
(51) Int. Cl.: A21D 2/26

(54) **DOUGH AND BREAD IMPROVER**
TEIG- UND BROTVERBESSERUNGSMITTEL
AGENT DE CONDITIONNEMENT DE PÂTE ET PAIN

(30) Priority: 07.04.2014 DK 201470182
(43) Date of publication of application: 19.04.2017
(73) Proprietor: Arla Foods amba, 8260 Viby J (DK)
(72) Inventor: SCHRÖDER, René, DK-6580 Vamdrup (DK)
(74) Representative: Plougmann Vingtoft a/s
(86) International application number: PCT/DK2015/050072
(87) International publication number: WO 2015/154775

(56) References cited:
- EP-A1- 0 090 406
- EP-A1- 2 153 735
- MARSHALL S C: "CASEIN MACROPEPTIDE FROM WHEY - A NEW PRODUCT OPPORTUNITY", CSIRO FOOD RESEARCH QUARTERLY, MELBOURNE, AU, vol. 51, no. 1/02, 1 January 1991 (1991-01-01), pages 86-91, XP002044765, ISSN: 0310-9070

## Description

### Technical field of the invention

The present invention relates to a method of improving a gluten network in a food product, for example a dough, bread or pasta. The present invention further relates to a compositions comprising the dough improver, uses of such compositions, and food products comprising the dough improver.

### Background of the invention

Many food products rely on the formation of a gluten network to in order to achieve the desired texture of the food product. For example, the formation of gluten network in wheat bread yields a product with a springy texture.

The springy texture, or the resilience, of the food product is influenced by the gluten network. Furthermore, the strength of the gluten network is related to many qualities, including dough performance, mixing tolerance of the dough, volume of the product, crumb structure of the product, sliceablity, and shelf-life.

Food products in which the gluten network is not formed or where only a weak gluten network is formed may have less resilience and poor performance in the mentioned qualities. For example they may crumble easily, feel stiff and/or dry, and have low volume.

Consequently, compositions which provide an improved resilience in food products, for example by improving gluten networks in food products, such as by stabilizing gluten networks, are sought after.

Furthermore, large quantities of bread are discarded daily because, even though it is nutritionally sound, the bread is not as soft as freshly baked bread ("staling") and the consumer rejects it on this ground. Ways of extending freshness of bread and prolonging the shelf-life in respect to softness are sought after, as this would improve the situation for retailers and consumers, as well as lead to reduced waste.

Furthermore, it is even more desirable that such compositions be "clean label", that is to say to avoid E-numbers which are considered by consumers to not be healthy.

EP 2 153 735 A1 discloses a pasta comprising whole egg liquid, Durum semolina (wheat flour), wheat gluten and cGMP.

### Summary of the invention

The inventors have surprisingly shown that inclusion of the peptide casein glycomacropeptide (CMP) in food products comprising a gluten network yields food products with increased softness, increased volume and finer crumb structure.

Without wishing to be bound by theory, it is believed that this effect is achieved by CMP strengthening the gluten network of the food product.

One object of the present invention therefore relates to providing a dough improver, and the invention is therefore useful at least for this object. In particular, it is an object of the present invention to provide a dough improver that solves the above mentioned problems of the prior art with regards to increasing dough performance, mixing tolerance of the dough; volume, crumb structure, sliceablity, and shelf-life of a food product.

Thus, the invention relates in one aspect to a method of stabilizing a gluten network in a food product comprising:
i) providing one or more ingredients to be used in the manufacture of said food product, wherein at least one ingredient comprises gluten;
ii) adding casein glycomacropeptide (CMP) to said one or more ingredients,
   wherein at least one of the ingredients is an aqueous ingredient and/or CMP is provided as an aqueous ingredient,
   and mixing,
   thereby forming a food product comprising a stabilized gluten network.

In another aspect, the invention relates to a food product comprising a stabilised gluten network and CMP, said food product being obtained when performing the method according to the invention.

In a further aspect, the invention relates to compositions for use in the method according to the invention, said compositions comprising
i) at least one ingredient comprising gluten and
ii) at least one ingredient comprising CMP, wherein said composition comprises CMP in an amount of from 0.01 to 0.45 g CMP/g gluten.

In yet a further aspect, the invention relates to the use of casein glycomacropeptide (CMP) to stabilize a gluten network in a food product.

In an even further aspect, the application describes a method of preparing a CMP-rich whey fraction suitable for use in a method according to the invention, the method comprising the steps of
i) providing a milk product comprising micellar casein,
ii) subjecting the milk product of step i) to microfiltration, yielding a micellar casein isolate,
iii) Optionally adding cream, vegetable oil and/or protein to the micellar casein isolate,
iv) using the micellar casein isolate in cheesemaking, wherein the micellar casein is cleaved by rennet and a curd is allowed to form,
v) draining and recovering the whey from the curd formed in the cheesemaking process, which is a CMP-rich whey fraction.

The invention is exemplified herein mainly in relation to breads, however, the invention is not so limited; it will become clear that any food relying on the strength of the gluten network in order to achieve the desired texture for food products will benefit from the inclusion of CMP and its stabilizing effect on the gluten network

### Brief description of the figures

Figure 1 shows a description of the basic method of baking bread. See Example 1.
Figure 2 shows the effect of inclusion of CMP on the volume of the bread. See also Example 1. Units=millilitres.
Figure 3 shows the effect of different dough improvers and CMP on weak flours. See also Example 2. 3A Cassionat=Caseinate; units=millilitres. 3B, arbitrary units.
Figure 4 shows the effect of combination of CMP and DATEM of a whole grain wheat bread. Units=millilitres. See also Example 3.4A Volume 4B Peak force and 4C shows resilience.
Figure 5 shows the results of sample breads with and without CMP. A. Volume measurements (ml), B. TPA Analyses after 2 days (Peak force, gram); C Resilience (arbitrary units). See Example 4.
Figure 6 shows the results of inclusion of CMP in a brioche recipe. 6A Volume (ml); 6B TPA (Peak force) over time (force (gram)). See also Example 5.
Figure 7 Farinographs showing the performance of flour during mixing. 7A: Without CMP; 7B: With inclusion of CMP. X-axis: minutes; Y-axis, Brabender Units. See Example 6.
Figure 8 shows extensographs A Flour + 2% salt; B Flour + 2% salt + 2% CMP, (y axis Brabender Units, x axis cm). See Example 7.
Figure 9 shows an example of one chromatograph. See also Example 8. Absorbance units.
Figure 10 shows TPA (Peak force) over time with and without CMP (Force (gram)). See also Example 13.
Figure 11 shows the effects of increasing amounts of CMP. Figure 11A shows the effects of increased amounts of CMP on softness of breads baked with increased amounts of CMP. Figure 11B shows the increased volume of breads baked using increasing amounts of CMP. See Example 10.
Figure 12 shows the influence of alpha lactalbumin/beta lactoglobulin content on the CMP effect in bread. 12A shows Peak force (g), indicating reduced softness with increasing amounts of alpha lactalbumin/beta lactoglobulin. Fig 12B shows decreasing volume of breads with increasing amounts of alpha lactalbum/beta lactoglobulin. See Example 11.
Figure 13 shows an example of Results from Texture Profile Analysis, and indicates the Peak Force, as well as the area under the curve used to calculate resilience (Area 3 and Area 4).

### Detailed description of the invention

### Definitions

Prior to discussing the present invention in further details, the following terms and conventions will first be defined:
In the context of the present invention, mentioned percentages are weight/weight percentages unless otherwise stated.

The term "and/or" used in the context of the "X and/or Y" should be interpreted as "X", or "Y", or "X and Y".

Numerical ranges as used herein are intended to include every number and subset of numbers contained within that range, whether specifically disclosed or not. Further, these numerical ranges should be construed as providing support for a claim directed to any number or subset of numbers in that range. For example, a disclosure of from 1 to 10 should be construed as supporting a range of from 1 to 8, from 3 to 7, from 4 to 9, from 3.6 to 4.6, from 3.5 to 9.9, and so forth.

All references to singular characteristics or limitations of the present invention shall include the corresponding plural characteristic or limitation, and vice versa, unless otherwise specified or clearly implied to the contrary by the context in which the reference is made.

Unless defined otherwise, all technical and scientific terms used herein have the same meaning as commonly understood by one of ordinary skill in the art.

The term "sweet whey" as used herein refers to the liquid remaining after milk has been curdled and strained, during the making of rennet types of cheeses.

The term "bakery food products" as used herein refers to food products typically produced by bakeries, including breads (further defined below), pastries, and the like.

The term "bread" as used herein refers to a food product mainly comprising flour. Typically breads are leavened, typically with yeast, but a bread may be leavened with any leavening agent, or may be unleavened. The term bread as used herein encompasses both savoury bread, and sweet types of bread which may comprise sweetener, greater amounts of oil and/or butter, and/or eggs as compared to unsweetened bread. Examples of types of savoury breads include, wheat bread, burger buns, hotdog buns, toast bread, sliced bread, whole wheat bread, rye bread, etc. Examples of sweetened breads include buns, brioche, babka, challah, Cozonac, Pandoro, Panettone, Paska, Vienna loaves and other Viennoiseries such as croissants, pain au chocolat, pain au lait, pain aux raisins, chouquettes and Danish pastries; as well as puff pastry.

Furthermore, where bread is referred to herein, also the dough for said bread is included in the reference unless explicitly stated otherwise.

The term breads includes breads regardless of the manner in which they are finally cooked; typically breads are baked, but e.g. bagels are boiled prior to baking, and others are boiled in oil (e.g. doughnuts and Berliner).

The term "dough improver" as used herein refers to a compound or mixture of compounds (composition) that when included in a food product, will improve the dough and/or the texture of the food product made from the dough, for example a bakery food product or pasta.

The term "flour" as used herein refers to a foodstuff which is a free-flowing powder, typically obtained by milling. Flour is most often used in bakery food products, such as breads, cakes, pastries etc., but also in other food products such as pasta, noodles, breakfast cereals and the like.

Typically flour is made from wheat, but flour may be made from many different grains, nuts or seeds. Examples of flours include wheat, triticale, rye, barley, oat, buckwheat, spelt, millet, quinoa, soya, corn, rice, potato, almond, hazelnut and coconut flour. The gluten content of different flours varies.

The terms "dough improver", "dough conditioner", "bread improver", "bread protein improver" are used interchangeably and refer to the same concept.

The term "gluten network" is used interchangeably with "visco-elastic network" and "gluten visco-elastic network"; and refers to the same concept.

The term "shelf-life" as used herein refers to the softness of the food product/ bakery food product/ bread, unless specifically stated otherwise. Bread is regarded as stale by the consumer, when the softness is decreased. Hence, consumer acceptable softness is important.

The term "microns" refers to micrometers.

### CMP's gluten network stabilizing effect

Without wishing to be bound by theory, it is believed that CMP will stabilize a gluten network formed in a dough, giving beneficial effects on both the dough and the final food product which may be for example a bread or a pasta.

By adding CMP to a recipe for a bread for example, an increased softness and shelf-life (consumer-acceptable softness) is obtained.

Before the invention is further discussed, a brief background on CMP and gluten networks is given.

### CMP Protein

CMP is also known as glycomacropeptide (GMP), casein glycomacropeptide (cGMP), caseinoglycomacropeptide, (cGMP), casein-derived peptide (CDP), or casein glycopeptide (CGP).

Bovine CMP is 64 kDa hydrophilic peptide which is formed during cheesemaking. Chymosin specifically cleaves κ-casein between the 105 to 106 amino acid residues, and the resulting para-κ-casein (residues 1 to 105) becomes part of the cheese curd, while CMP (residues 106 to 169) remains in the whey.

Two variants of bovine CMP exist: Variants A and B. The amino acid sequence of each variant is set forth below.
CMP variant A: (SEQ ID NO:1)
CMP variant B:(SEQ ID NO.2)

For the purpose of the present invention, reference to "CMP" includes bovine CMP of either variant A or variant B or a mixture of the two variants, as well as CMP from any other suitable source such as buffalo, horse, goat, sheep.

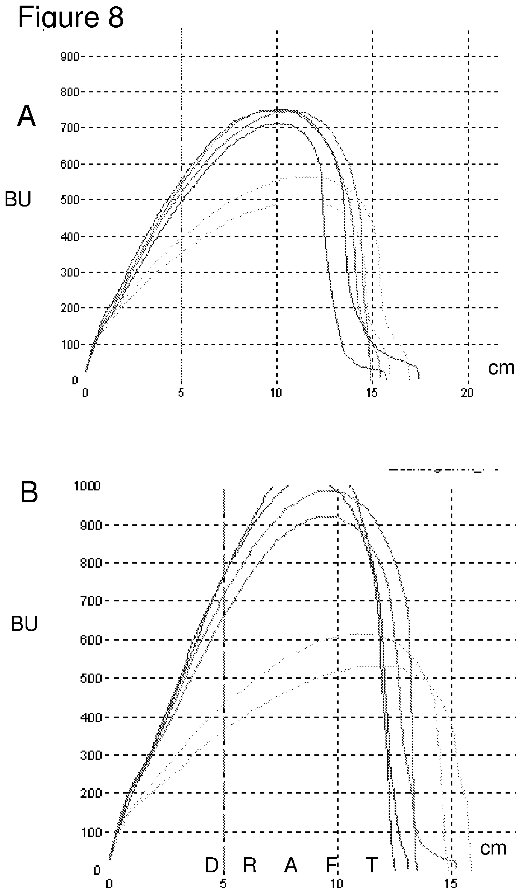

It has been surprisingly shown by the inventors that inclusion of CMP in a dough will lead to stabilization of the gluten network formed in the dough, and in synergy with the gluten lead to a dramatic increase of the elastic modulus of said dough (see Fig. 8). The increased elastic modulus results in an increased volume of the dough and/or food product, and an increased softness of said product.

The foaming effect of CMP in aqueous systems is documented in the prior art. However, such foams are well-known to be highly instable, and they collapse as soon as whipping is stopped. Further, the foam produced by CMP will not form in the presence of even a minor amount of fat. Bread dough does contain fat, and therefore no CMP foam is believed to form in the context of a bread dough.

It is surprising that CMP should work as a gluten network stabilizer, at least because CMP cannot itself gel under conditions typically present in preparation of a dough (e.g. about pH 6- 7), and usually inhibits gelation of whey proteins.

### Gluten network

Gluten network is made up of two proteins, glutenin and gliadin. When mixed with water and agitated, glutenin and gliadin come together to form a glutennetwork. The gluten network, is both plastic (i.e. able to change shape) and elastic (i.e. able to spring back into place).

Thus, in the context of this application, a gluten network is defined as a three-dimensional protein network made up of glutenin and gliadin which is formed when they are hydrated and agitated. The agitation is typically done by mixing. Gluten networks are typically formed when gluten-containing flour, e.g. wheat flour, is mixed with water. The mixing leads to a breaking and reforming of bonds between the gluten and gliadin molecules. This results in a dough, which is essentially a gluten network with embedded air (or gas) and starch granules.

The gluten network contributes to the texture of the dough and the final food product, for example in breads and/or pasta. A strong gluten network is required in food products where a more chewy or springy texture is desired, such as for example breads, pasta.

In order to get a strong gluten network, flours with high gluten levels are used to bake breads. For example, bread flour may be used. For pasta, flour made from durum wheat is used.

In other foods, the formation of a gluten network is not desired because the chewy texture is not desirable. For example in cakes such as a pound cake, the desired texture is light. In such food products, flours with lower gluten content is used, such as cake flours or pastry flours.

### Stabilizing the gluten network

The present invention is based on the observation that CMP stabilises gluten networks. The term "stabilise gluten network" in the context of this invention means rendering the gluten network less susceptible to degradation.

Mixing of gluten proteins (e.g. present in a wheat flour) with water leads to formation of a gluten network. In the process of mixing, bonds are formed and broken. Initially, the mixing leads to formation of a gluten network.

However prolonged mixing will lead to the degradation of the network, which is a mechanical degradation, and collapse of the dough, leading to reduced volume and tougher texture. Without wishing to be bound by theory, it is believed that inclusion of CMP protects the bonds formed, making them and the gluten network less susceptible to such degradation.

Using different systems, the inventors have quantified the stabilizing effect that CMP has on the gluten network.

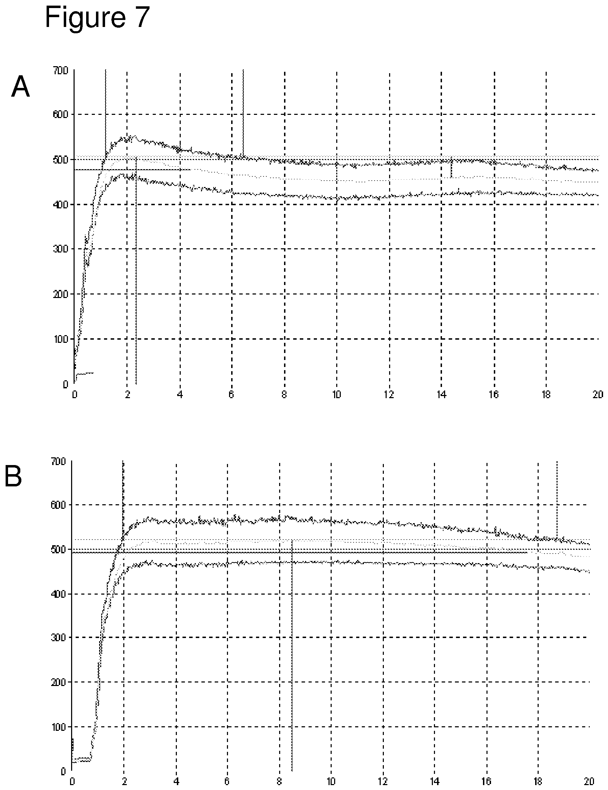

In farinographs (see Example 6, and Figure 7) it is seen that inclusion of CMP leads to an increase in difference between Arrival Time and Departure Time (see Example 6 for further definitions), which reflects a stabilisation of the gluten network.

In extensographs (see Example 7 and Figure 8), the inclusion of CMP leads to an increase in the force required to rupture the dough, which reflects a strengthening of the gluten network.

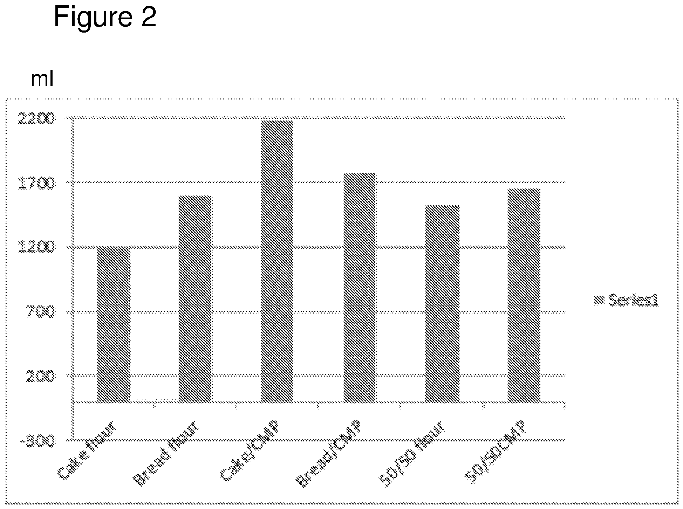

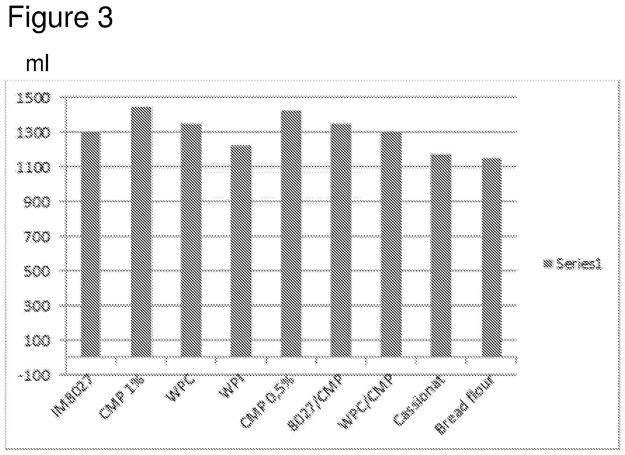

Furthermore, the strengthened gluten network leads to increased volume of breads which include CMP (see for e.g. Example 1. and Figures 2 and 3).

Thus, in the context of this application, the stabilization of gluten network and the strengthening of the gluten network refer to the same concept and the terms strengthen and stabilize are used interchangeably.

The gluten network stabilizing effect of CMP takes place in the formation of the dough, and may be noted in the final product.

In certain embodiments of the methods of stabilising gluten network according to the invention, the gluten network may be considered stabilized when the farinograph for the dough comprising CMP according to the invention displays an increase in stability (as defined by reference to a farinogram, being the difference between Arrival time and Departure time; see also definitions in Example 6), of at least 25 % as compared to the stability for a corresponding dough not comprising CMP, such as for example an increase of at least 50%, at least 75%, at least 100%, at least 150%, at least 200%, at least 250%, at least 300%; or for example an increase in the range from 25% to 500%, such as from 25% to 400%, 25% to 300%, 25% to 250%, 25% to 200%, 25% to 150%, or 25% to 100%; or for example from 50% to 500%, 75% to 500%, 100% to 500%, 150% to 500%, 200% to 500%, 250% to 500%, 300% to 500% or 400% to 500%.Farinographs are well known in the field.

In yet further embodiments of the methods of stabilising gluten network according to the invention, the gluten network may be considered stabilized when the mixing tolerance index of the dough (as defined by reference to a farinogram, see definitions in Example 6) comprising CMP according to the invention is decreased at least 5%, as compared to a corresponding dough not comprising CMP; such as for example a decrease of at least of at least 10%, at least 20%, at least 30% at least 40%, at least 50%, at least 60%, at least 70%, at least 80%; or for example from 5 to 90%, such as 10 to 90%, 15 to 90%, 20 to 90%, 30 to 90%, 40 to 90% 50% to 80%, 50 to 70%: or for example 10 to 80%, 10 to 70%, 10 to 60%, 10 to 50%, 10 to 30%, 10 to 20%.

In other embodiments of the methods of stabilising gluten network according to the invention, the gluten network may be considered stabilized when the force required to rupture the dough comprising CMP according to the invention is increased, for example at least 5% increase in force required as measured by extensograph, as compared to a corresponding dough not comprising CMP; such as an increase of at least 10%, at least 15%, at least 20%, at least 25%, at least 30% at least 40% at least 50%, at least 75%, at least 100%; or for example an increase in the range from 5% to 200%, such as from 5% to 175%, 5% to 150%, 5% to 100%, 5% to 80%, 5% to 75%, 5% to 50%; or for example from 10% to 200%, such as 15% to 200%, 20% to 200%, 20% to 150%, 20% to 120%, 30% to 120%, 40% to 120%, 50% to 120%.

Extensographs are well-known in the field.

In yet further embodiments of the methods of stabilising gluten network according to the invention, the gluten network may be considered stabilised when the volume of a food product comprising CMP according to the invention, such as a bakery food product, such as a bread, or a dough, is increased, for example at least 5% as compared to a corresponding food product not comprising CMP; such as for example an increase of at least 10%, at least 15%, at least 20%, at least 25%, at least 30% at least 40% at least 50%, at least 75%, at least 100%; or for example an increase in the range from 5% to 200%, such as from 5% to 175%, 5% to 150%, 5% to 100%, 5% to 80%, 5% to 75%, 5% to 50%; or for example from 10% to 200%, such as 15% to 200%, 20% to 200%, 20% to 150%, 20% to 120%, 30% to 120%, 40% to 120%, 50% to 120%.

Volume may be determined by standard methods, see for example Example 1.

In still further embodiments of the methods of stabilising gluten network according to the invention, the gluten network may be considered stabilised when the peak force (the peak force being determined by Texture Profile Analysis, see discussion in Example 3) for a food product comprising CMP according to the invention, such as a bakery food product, such as a bread, or a dough, is decreased, for example at least 5% as compared to a corresponding food product not comprising CMP; such as for example an decrease of at least 10%, at least 15%, at least 20%, at least 25%, at least 30% at least 40% at least 50%, at least 75%, at least 100%; or for example an decrease in the range from 5% to 200%, such as from 5% to 175%, 5% to 150%, 5% to 100%, 5% to 80%, 5% to 75%, 5% to 50%; or for example from 10% to 200%, such as 15% to 200%, 20% to 200%, 20% to 150%, 20% to 120%, 30% to 120%, 40% to 120%, 50% to 120%.

The determination of peak force may be done as described in Example 3, using the settings described in Table 3A, Settings for Texture Profile Analysis.

The inclusion of CMP may also promote formation of gluten networks. As can be see in in Example 6, Table 11, inclusion of CMP leads to the shortening of arrrival time. Thus, in even further embodiments, the gluten network may be considered stabilised when the dough comprising CMP according to the invention displays a decrease in arrival time (as defined by reference to a farinogram; see also definitions in Example 6), of at least 25 % as compared to the arrival time for a corresponding dough not comprising CMP, such as for exampleat least 50%, at least 75%, at least 100%, at least 150%, at least 200%, at least 250%, at least 300%; or for example an decrease in the range from 25% to 500%, such as from 25% to 400%, 25% to 300%, 25% to 250%, 25% to 200%, 25% to 150%, or 25% to 100%; or for example from 50% to 500%, 75% to 500%, 100% to 500%, 150% to 500%, 200% to 500%, 250% to 500%, 300% to 500% or 400% to 500%.

### Method of stabilizing a gluten network

### Manufacture of dry product

Accordingly, the invention in one aspect relates to a method of stabilizing a gluten network in a food product comprising:
i) providing one or more ingredients to be used in the manufacture of said food product, wherein at least one ingredient comprises gluten;
ii) adding casein glycomacropeptide (CMP) to said one or more ingredients, wherein at least one of the ingredients is an aqueous ingredient and/or CMP is provided as an aqueous ingredient, and mixing, thereby forming a food product comprising a stabilized gluten network.

Some embodiments of the method according to the invention relates to the method wherein the ingredients in step i) and the CMP in step ii) comprise dry ingredients, for example powders. According to the present invention a dry ingredient typically comprises less than 25% (w/w) water, e.g. less than 20% (w/w), less than 19% (w/w), less than 18% (w/w), less than 17% (w/w), less than 16% (w/w) or less than 15% (w/w) water. According to some embodiments a dry ingredient which may be in the form of a powder, may also comprise a certain amounts of non-aqueous liquid, such as oil. For example, inclusion of up to 15% (w/w) liquid oil in a flour may still yield a dry product or powder.

According to the method, one or more of the ingredients in step i) and/or the CMP in step ii) are wet ingredients. According to the present invention, wet ingredients comprises water in an amount which is sufficient to generate a wet or hydrated product or composition when mixed with a dry ingredient or product as defined above. A wet ingredient is the same as an aqueous ingredient, and the terms are used interchangeably. A wet ingredient typically comprises at least 30% (w/w) water, such as at least 35%(w/w) water, such as at least 40% (w/w) water or such as at least 45% (w/w) water. Typical wet ingredients used according to the present invention are water, milk, whole egg, egg yolk, egg white, a milk-derived liquid such as whey, vegetable- or plant-derived juices, beer, wine and/or combinations thereof.

This method of stabilizing a gluten network has the effect of increasing shelf-life (reducing staling) of a dough and/or bread as well as increasing the strength of a dough, increasing the volume of a dough and/or bread, increasing softness of a dough and/or bread.

### Food products

The food products may be any food product where a stronger gluten network would give a desired texture. See further discussion regarding compositions of the invention.

### Amounts of CMP

In any of the embodiments of the invention, the method of stabilizing a gluten network according to the invention may be characterized by that said CMP is added in an amount of from at least 0.01 g CMP/g gluten.

In some embodiments the CMP is added in an amount of from 0.01 to 0.8 g CMP/ g gluten; such as for example from 0.03 to 0.8, such as 0.05 to 0.8, 0.08 to 0.8, 0.1 to 0.8 g CMP/g gluten.

In some embodiments, said CMP is added in an amount of from 0.01 to 0.5 g CMP/g gluten, for example from 0.03 to 0.5, such as 0.05 to 0.5, 0.08 to 0.5, 0.1 to 0.5; or for example 0.01 to 0.4 g CMP/g gluten, such as 0.01 to 0.3 g, 0.01 to 0.2, 0.01 to 0.1 g CMP/g gluten.

Below about 0.01 g CMP/g gluten, the effect of CMP becomes so small as to be negligible. Adding an amount of CMP beyond 0.5 g/g gluten, on the other hand, does not appear to increase the stabilisation of the gluten network further; the cost of adding increasing amounts of CMP makes embodiments with higher amounts of CMP less attractive for economical reasons beyond this point. Therefore, the feasible limits of the invention may be set to 0.01 to 0.5 g CMP/g gluten.

Addition of CMP beyond 0.5 g CMP/g gluten does not appear to have detrimental effects, but as mentioned, the positive effects level off beyond this level.Some embodiments relate to the method according to the invention, wherein said CMP is added in an amount of from 0.2 to 10 % (w/w) of dry ingredients.

The amount of CMP may also be expressed as a percentage of the dry weight of an embodiment of the invention.

In embodiments where the food product according to the invention is a product mix (such as for example a flour mix or bread mix), CMP may be added to a final concentration of about 0.05 - 2% per weight of the food product, such as for example 0.06 to 1.5 %, 0.08 to 1%, 0.1 to 1 %. 0.15 to 1%, 0.2 to 1%, 0.3 to 1%, 0.5 to 1%; or for example from 0.05 to 0.9%, 0.05 to 0.8%, 0.05 to 0.7%, 0.05 to 0.5%.

In other embodiments where the food product according to the invention is a dough, CMP may be added to a final amount of for example about 0.05 - 5% per weight of the food product, such as for example 0.1 to 4%, 0.1 to 3.5%, 0.1 to 3%. 0.51% to 2.5%, 0.1 to 2%, 0.1 to 1.5%, 0.1 to 1.3%, 0.1 to 1.2%, 0.1 to 1%, 0.1 to 0.8%. 0.1 to 0.7%, 0.1 to 0.5%; or for example from 0.1 to 3%, 0.1 to 2.5%, 0.5% to 2%.

In other embodiments where the food product according to the invention is a bread or a pasta, CMP may be added to a final amount of for example about 0.05 - 5% per weight of the food product, such as for example 0.1 to 4%, 0.1 to 3.5%, 0.1 to 3%. 0.1 to 2.5%, 0.1 to 2%, 0.1 to 1.5%, 0.1 to 1.3%, 0.1 to 1.2%, 0.1 to 1%, 0.1 to 0.8%. 0.1 to 0.7%, 0.1 to 0.5%; or for example from 0.1 to 3%, 0.1 to 2.5%, 0.5% to 2%.

### Form of CMP

The CMP which is added may be in any form which is suitable for a food product.

For example, the CMP which is added may be produced as described in WO9929183.

In other examples, the CMP which is added may be a CMP-containing product from Arla, such as LacProdan ® CGMP 20 and/or LacProdan ® CGMP 10. These products are commercially available from Aria Foods Ingredients Group P/S; Sønderhøj 10 - 12; 8260 Viby J, Denmark.

Alpha-lactalbumin and beta-lactoglobulin when present in certain amounts may inhibit the gluten network stabilizing effect of CMP. Therefore, particular embodiments relates to methods of the invention wherein the combined amount (weight) of alpha lactalbumin and beta lactoglobulin present in the one or more ingredients provided in step i) combined with the CMP provided in step ii), corresponds to less than 50% of the amount (weight) of the total amount of CMP added in step ii).

In order to reduce the amount of alpha-lactalbumin and/or beta lactoglobulin present in the food product, the CMP which is added may be provided in the form of a purified or semi-purified fraction of whey, whey protein isolate (WPI) or whey protein concentrate (WPC), for example a whey fraction where CMP makes up at least 50% of the total protein content by weight of said fraction. For example, the whey fraction may comprise an amount of CMP which is 55 to 98% of the total protein content by weight, or for example 50 to 95%, 50 to 90%, 50 to 85%, 50 to 80%, 50 to 75%, 50 to 70%; or for example 55 to 95%, 60 to 95%, 65 to 95%, 70 to 95%, or for example 80 to 98% of the total protein content by weight.

In particular embodiments of the invention, the whey fraction, WPI or WPC is derived from sweet whey. In further particular embodiments, the whey fraction is a CMP-rich whey fraction, for example a CMP-rich whey fraction obtained or obtainable by the method described herein for making a CMP-rich whey fraction.

The CMP may alternatively be provided as a fraction of whey, WPI or WPC which comprises reduced amounts of alpha lactalbumin and beta lactoglobulin as compared to whey fraction, WPI and/or WPC; for example the combined amount of alpha lactalbumin and beta lactoglobulin make up less than 50% of the total protein content of said fraction.

In further embodiments, the combined amount of alpha lactalbumin and beta lactoglobulin in the whey fraction, WPI or WPC make up at most 50% of the total protein content of the WPI or WPC, such as 0 to 50%, 0 to 45%, 0 to 40%, 2 to 40%, 5 to 35%, 5 to 30% or for example from 10 to 35% of the total protein content of said fraction.

### Ingredients

In the method of the invention at least one of the ingredients to be used in the manufacture of said food product comprises gluten.

### Gluten content in flour

Depending on what they are made from, flours may contain gluten and they are often characterized by their gluten content, as this is a major factor in determining the suitability of the flour for a particular application.

High gluten content flours are typically wheat flours, while low gluten content flours may be made from wheat with low gluten content, from other grains with naturally low gluten content, or may be a mixture of flours with high gluten content with flours with low to no gluten content.

The following table gives an overview of protein content in different flours.

| | | Protein (Total Kjeldahl nitrogen) | Approximate gluten content (percent by dry weight) |
|---|---|---|---|
| Strong flours (high gluten content) | Bread flour | 13- 16%* | 10 - 13% |
| | All-purpose flour | 10-12% | 8 - 9 % |
| Soft flours (low gluten content) | Pastry flour | ∼9% | ∼7% |
| | Cake flour | ∼7-8% | 5 - 6 % |

| | | | |
|---|---|---|---|
| *Protein content in percent by dry weight, measured by Total Kjeldahl nitrogen; about 80% of the protein is made up of gluten proteins gliadin and glutenin. | | | |

For the purposes of this application low gluten content is defined as a gluten content of from 0% to about 7% gluten (corresponds to protein content of from 0% to about 9%) by weight, while a high gluten content is defined as a gluten content of over 8% (corresponds to protein content of over 9%) by weight.

Flours with low gluten content are suitable for baking cakes, such as cookies, angel cake, sponge cake, etc. These cakes do not rely on gluten network to achieve the desired texture. Indeed, strong gluten networks are typically not desired in these food products, because they would impart a tough and chewy texture instead of the desired lighter and flakier texture. Therefore, sometimes low gluten content flours are referred to as "cake flours".

Cake flours are fine-textured flours, typically made from wheat flour, but may also contain other flours from other sources, such as wheat, triticale, rye, barley, oat, buckwheat, spelt, millet, quinoa, soya, corn, rice, potato, almond, hazelnut and coconut. Cake flours typically have high starch and low gluten content .

Flours with no gluten (for example, those made from items which naturally do not contain gluten such as coconut flour, almond flour) will not form gluten networks.

It may be noted that not only the gluten content, but also the quality of the gluten can influence the gluten network forming capability. The quality of the gluten is related to the ratio of gliadin and glutenin proteins in gluten, and their quality.

Millers and bakers routinely test the quality of gluten in a flour in order to determine the suitability of the flour for particular applications. Melynk et al (J of Cereal Science 56 (2013) 561- 567) describes a method whereby the quality of gluten can be tested.

### Flours

One embodiment relates to a method according to the invention wherein said one or more ingredients comprises one or more flours.

For example, the one or more flours may be selected from the group consisting of wheat, triticale, rye, barley, oat, buckwheat, spelt, millet, quinoa, soya, corn, rice, potato, almond, hazelnut, coconut, Graham's flour and combinations thereof.

In one specific embodiment, the one or more flour is wheat flour.

Flours which comprise gluten are examples of an ingredient which may be provided as an at least one ingredient comprising gluten according to step i) of the method.

Thus, the at least one ingredient comprising gluten may be selected from flours of grains which contain gluten, such as one or more of flours of wheat, triticale, barley, oat, buckwheat, spelt, Graham's flour.

The grains wheat and triticale each typically contains enough gluten to yield a flour which is considered bread-baking quality. The flours with highest gluten content are wheat flours and triticale flours, where wheat flour has highest gluten content. These flours may therefore be present as the sole source of gluten for example in a bread.

Accordingly, one embodiment of the method relates to a method wherein said at least one ingredient comprising gluten consists of flour made from wheat and/or triticale.

One specific embodiment relates to a method of the invention wherein the at least one ingredient comprising gluten is wheat flour.

In further embodiments, the wheat flour may be selected from the group consisting of Type 550, Danish wheat bread flour, Reform flour, Manitoba and combinations thereof.

In some embodiments, the invention relates to a method of the invention wherein the flour has a protein content which is in the range of from 5 to 18%, such as for example, from 6 to 12%, from 6 to 10%, from 6 to 9%, from 7 to 9%; or for example from 10 to 12%, from 11 to 12%; or such as in the range of 5% to 9%, for example 7% to 9% or 8 to 9%; or for example in the range from 10% to 18%, such as 10% to 16%.

In other embodiments, the invention relates to a method of the invention wherein the flour, or the provided ingredients as a total, have a gluten content which is in the range from 5% to 13%, such as for example from 5 to 9%, 5 to 7%, 5 to 6%; or for example from 8 to 13%,9 to 13%, such as from 10 to 13%.

### Other gluten flours

Alternatively, said at least one ingredient comprising gluten may be a mixture of wheat and/or triticale, and one or more of flours selected from the group consisting of barley, oat, buckwheat, spelt, millet.

Further examples of an ingredient which comprises gluten is malted wheat flour.

Flours with lower gluten content than wheat or triticale; or low gluten quality, are often supplemented with wheat and/or triticale in order to provide enough gluten to achieve the desired texture. Thus, at least one ingredient comprising gluten may be for example one or more flours which contain gluten but which are not wheat or triticale, for example one or more flours selected from the group consisting of barley, oat, buckwheat, spelt.

### Gluten-free flours

Examples of an ingredient to be used in the manufacture of a food product may be one or more flours, which do not contain gluten (gluten-free flour).

Accordingly, one embodiment relates to a method of the invention wherein the flour may be one or more flours selected from millet, quinoa, soya, corn, rice, potato, almond, hazelnut, coconut, and combinations thereof.

### Gluten

In order to create stronger gluten networks, bread flours are sometimes supplemented by addition of extraneous gluten, i.e. a preparation of wheat gluten protein is added to a flour, in order to boost or promote the formation of gluten networks, and/or to stabilize the gluten network

Therefore, the at least one ingredient comprising gluten according to step i) of the invention, may be a preparation of wheat gluten protein. Said preparation may comprise at least 50% wheat gluten protein, for example at least 60%, at least 70%, at least 80%, at least 90%, or may essentially consist of wheat gluten protein.

One particular embodiment relates to a method according to the invention, wherein the ingredients comprise a flour with a protein content within the range of 7 to 16% (for example from 7-12%, 7-9%, or 7-8% protein content); a preparation of wheat gluten protein; and CMP.

A further particular embodiment relates to a method according to the invention, wherein the ingredients comprise a flour with a gluten content within the range of 5 to 13%, a preparation of wheat gluten protein and CMP.

### At least one ingredient comprising gluten

Thus, it may be seen that the at least one ingredient comprising gluten may be selected from the group consisting of a flour which contains gluten, one or more flours with high gluten content, such as wheat flour and/or triticale flour; one or more flour with low gluten content, such as one or more flours selected from millet, quinoa, soya, corn, rice, potato, almond, hazelnut, coconut, and combinations thereof; and/or a preparation of gluten protein, such as wheat gluten protein.

As the skilled person will understand, it may be desirable to add extraneous gluten, e.g. a preparation of wheat gluten protein, when the flour used in the manufacture of said food product is mainly or entirely selected from flour with low gluten content and/or flour without gluten.

### Further dry ingredients

According to the method of the invention, one or more ingredients to be used in the manufacture of a food product are provided.

Said one or more ingredients may comprise any ingredients suitable for a food product and may for example be one or more ingredients selected from the group consisting of gluten-free flours, dough improvers, emulsifiers, flavouring agents, colouring agents and leavening agents.

### Dough improvers

The formation and/or stabilisation of the gluten network may be supported also by other ingredients. In prior art it is known that addition of certain factors will improve dough and the structure of the final food products, e.g. breads.

Accordingly, one embodiment relates to a method according to the invention, wherein CMP is used in conjunction with at least one previously known dough improvers, e.g. one or more of known dough improvers selected from ascorbic acid, bromate, sodium caseinate, calcium caseinate, sodium stearoyl lactylate (SSL), calcium stearoyl lactylate (CSL), ethoxylated mono- and diglycerides (EMG), polysorbates (PS), succinylated monoglycerides (SMG) and DATEM and enzymes such as one or more of amylase, glucose oxidase, lipase, lipoxygenase, hexose oxidase and xylanase.

The other dough dough improvers may work in the different ways as the CMP, and influence other parameters.

Thus, CMP may be added "on top" of a conventional recipe, for example in conjunction with previously known dough improvers with only minimal adjustments to the recipe. The ease of implementing CMP in a conventional recipe, and in an already present and functioning production line, gives economical advantages.

Alternatively, CMP may be used instead of previously known dough improvers.

Thus, the method relates in one embodiment to a method wherein no dough improvers, other than CMP, is provided.

### Manufacture of wet compositions/dough

In order to form a gluten network, the gluten proteins must be hydrated and physically agitated, for example by mixing or stirring. Hydration is achieved by addition of water and/or at least one aqueous ingredient.

Accordingly, the method of the invention comprises hydration and subjecting said one or more ingredients to mixing, during and/or after addition of said CMP, to form a product comprising a gluten network, for example a wet product such as a dough.

Including CMP in a dough gives effects on the gluten network which are apparent already in the dough as is shown in Example 6 and 7. When CMP is included, the elastic modulus of the dough is increased, and the mixing time for the dough becomes approximately 10% longer before maximum dough development. The dough can thus better tolerate mixing and over-mixing than such a dough where CMP is not present.

In a further embodiment, the mixing according to the method of the invention is continued until optimal development (described under Mixing below).

The term mixing is defined herein as a physical or mechanical treatment, and may be for example by agitation, stirring or the like, and combinations thereof.

### Hydration

Formation of the gluten network requires both mixing, as well as the presence of water.

The water may be provided by addition of one or more aqueous or wet ingredients as defined herein; said aqueous ingredients may be selected according to the desired product, and may for example selected from water, milk, whole egg, egg yolk, egg white, a milk-derived liquid such as whey, vegetable- or plant-derived juices, beer, wine and/or combinations thereof.

In a specific embodiment of the method of the invention, the one or more aqueous ingredients are selected from water, milk and/or egg (such as whole egg, egg yolk and/or egg white).

In specific embodiments of the method of the invention, the mixing is performed during and/or after addition of one or more aqueous ingredient.

### Mixing

To produce an optimum loaf of bread, dough is preferably mixed to the peak of the mixing curve (Pomeranz, Modern cereal science and technology, VCH Publishers, New York (1987); Pomeranz, Composition and functionality of wheat flour components, in: Y. Pomeranz (Ed.), Wheat chemistry and technology, Vol. II, Amer. Assoc. Cereal Chem., St. Paul, MN (1988), pp. 219-343 1988). This point is known as optimal development, and may be determined empirically for different flours, e.g. by determining a farinograph.

Figure 7A describes a typical farinograph for a conventional flour-water system. The point of optimal dough development is at the peak, and is indicated by the middle vertical line. As can be seen, the mixing resistance declines after the peak, indicating breakdown of the gluten strands and/or gluten network. Thus, mixing should not continue after the point of optimal development.

In contrast, figure 7B shows a farinograph for the same system as A, with inclusion of CMP. Here the dough can be mixed for longer period, without reaching breakdown of the gluten strands and/or gluten network.

Thus, this increased mixing tolerance means that CMP can be mixed for longer without the dough collapsing and is less sensitive to fluctuations in the process, and leading to a more robust process of making the dough. Furthermore, the increased mixing tolerance leads to less fluctuation in the quality and higher volume of the bakery food product, such as a bread.

The mixing tolerance of a dough comprising CMP is increased in comparison to the same dough where no CMP is added. Accordingly, the invention in one embodiment relates to a method according to the invention wherein mixing is continued until optimal development, such as where the dough is mixed until optimal development of the dough is achieved.

In an alternative embodiment of the method according to the invention, the mixing is for at least twice as long as the same recipe without inclusion of CMP requires; or for example at least 1.75 times, at least 1.5 times, or at least 1.25 times as long.

The method of the invention may be useful for increasing the elastic modulus of a dough. The increase may for example be at least 10%, more than 10%, from 10% to 80%, such from 10 to 50%, such as 10 to 30%. The elastic modulus may be measured by extensograph.

Alternatively, the mixing tolerance may be stated in terms of Mixing Tolerance Index (MTI), which may be calculated based on values extracted from a farinograph (see also Example 6). The formula for Mixing Tolerance Index is seen in Example 6-. Thus, the present invention may also relate to a method for decreasing the mixing tolerance index of a dough, the mixing tolerance index being calculated according to the formula in example 6 by at least 5%, the method comprising the steps of
i) providing one or more ingredients to be used in the manufacture of said food product, wherein at least one ingredient comprises gluten; and
ii) adding casein glycomacropeptide (CMP) to said one or more ingredients, and hydrating and mixing to form a dough.
In particular embodiments, step ii) comprises adding casein glycomacropeptide (CMP) to said one or more ingredients, such that the ratio of CMP to (the combined amount of alpha lactalbumin together with beta lactoglobulin) in the dough is at least 2:1 (dry weight), for example at least 1:1, or at least 0.9:1, 0.8:1 (dry weight),

In further embodiments, the ratio of CMP to (the combined amounts of alpha lactalbumin and beta lactoglobulin) in the dough is in the range from 100:0 to 30:70, or 90:10 to 30:70, such as 80:20 to 30:70, 70:30 to 30:70, for example 60:40 to 30:70.

The mixing tolerance index may be decreased by for example decreased at least 5%, as compared to a corresponding dough; such as for example a decrease of at least of at least 10%, at least 20%, at least 30% at least 40%, at least 50%, at least 60%, at least 70%, at least 80%; or for example from 5 to 90%, such as 10 to 90%, 15 to 90%, 20 to 90%, 30 to 90%, 40 to 90% 50% to 80%, 50 to 70%: or for example 10 to 80%, 10 to 70%, 10 to 60%, 10 to 50%, 10 to 30%, 10 to 20%.

### Manufacture of bakery food product

The method of the invention may further comprise a step of heat treatment. If the method is directed to for example making a pasta, the heat treatment may be suitable for drying a pasta. If the product is a bakery food product the heat treatment is suitable for baking the food product.

The heat treatment may for example be at a temperature within the range of 100 to 400 degrees Celsius; and may have a duration of from 45 seconds to two hours.

The method of the invention may further comprise one or more steps of proofing, resting and/or leavening.

It is often the case that food products which rely on gluten network for the texture of the final food product are leavened. In a yeasted bread for example, the air or gas bubbles which are expanded by yeast fermentation in the leavening process in bread, are able to stretch the dough due the extensibility of the gluten network. Without wishing to be bound by theory, it is believed that the gluten networks which are stabilised according to the invention are able to extend more without collapsing.

However, leavening is not a prerequisite for the formation of a gluten network, and therefore is not a prerequisite for the gluten network stabilizing effect of CMP. This is for example demonstrated in the case of pasta, which also relies on gluten network for its desired texture. Furthermore, leavening may be achieved in any suitable way.

The food product may for example be leavened using biological leavening agents, chemical leavening agents, mechanical leavens or a combination thereof.

Examples of biological leavening agents include yeast, and sour dough.

Examples of chemical leavening agents include bicarbonate, monocalcium phosphates (Ca(H2PO4)2). Other leavening agents developed include sodium aluminum sulfate (SAS), monocalcium phosphate, sodium acid pyrophosphate (SAPP), sodium aluminum phosphates (SALP), sodium bicarbonate.

Examples of mechanical leavening includes high intensity mixing.

The method may also comprise steps of dividing, molding and/or shaping the composition.

One particular embodiment relates to a method according to the invention wherein the product comprising a gluten network is divided, shaped, leavened, proved, and subjected to a heat treatment.

It is believed that the heat treatment, proofing, resting and/or leavening, and the dividing, molding and/or shaping steps are not critical for the gluten network strengthening effect of CMP.

The invention also relates to methods of preparing bakery food products and/or pasta.

Thus some embodiments relate to a method according the invention, wherein said product comprising a stabilised gluten network is divided, shaped, leavened and/or proved.

Further embodiments relate to a method according to the invention, comprising subjecting said product comprising a gluten network to heat treatment/baking.

Further embodiments relate to a method according to the invention wherein said heat treatment is at temperature within the range of 100-400 degrees Celsius.

Further embodiments relate to a method according to the invention, wherein said heat treatment has a duration of 45 sec -2 hours.

### Manufacture of pasta

Pasta differs from bread in that instead of baking, the dough is extruded and then dried. However, the same principles apply to the making of the dough.

### Food products which comprise gluten, but which do not form a gluten network

Certain food products, for example cakes and biscuits are also commonly made from wheat flour, although this flour usually has a low gluten content (7-9% protein content; about 5 to 7% gluten content). In contrast to breads, the development of gluten networks is usually discouraged in these food products as it results in an undesirable and tough texture in these products.

The addition of CMP will not improve texture in food products which do not rely on gluten network for their texture. For example, some cakes such as pound cake, rely on foaming of egg protein for the texture. In a pound cake, no gluten network is formed because of the negative effect of the presence of fat on the gluten network. Thus, inclusion of CMP cannot stabilize a gluten network, and will not impart increased resilience and therefore not improve texture.

### Further methods

It was observed that presence of alpha lactalbumin and/or beta lactoglobulin could inhibt the gluten network stabilising effect of CMP.

Thus, the invention may also relate to a method of strengthening the gluten network in a food product according to the invention, such as a dough, bread or pasta comprising the steps of
- providing one or more ingredients to be used in the manufacture of said food product, wherein at least one ingredient comprises gluten, and
- adding CMP such that the ratio of CMP to (the combined amount of alpha lactalbumin together with beta lactoglobulin) in the food product is at least 2:1 (dry weight), for example at least 1:1, or at least 0.9:1, 0.8:1 (dry weight).

In further embodiments of the method of the invention, the food product comprises alpha lactalbumin and/or beta lactoglobulin, and the ratio of CMP to (the combined amounts of alpha lactalbumin and beta lactoglobulin) in the food product according to the invention is in the range from 90:10 to 30:70, such as 80:20 to 30:70, 70:30 to 30:70, for example 60:40 to 30:70.

In yet further embodiments, the ratio of CMP to (the combined amounts of alpha lactalbumin and beta lactoglobulin) in the food product according to the invention is in the range from 100:0 to 50:50, such as from 90:10 to 50:50, 80:20 to 50:50, 70:30 to 50:50, 60:40 to 50:50.

In an embodiment of the invention, the food product comprises an amount of alpha lactalbumin and/or beta lactoglobulin which corresponds to less than 50% of the amount of the CMP.

Some embodiments relate to a method according to the invention, wherein the combined amount of alpha lactalbumin and beta lactoglobulin present in the one or more ingredients provided in step i) combined with the CMP provided in step ii), corresponds to less than 50% of the amount of the CMP which is added in step ii).

Further embodiments relate to a method according to the invention, wherein said CMP is provided in the form of a fraction of WPI or WPC where CMP makes up at least 50% of the total protein content of said fraction by weight Further embodiments relate to a method according to the invention, wherein the amounts of alpha lactalbumin and beta lactoglobulin together make up less than 50% of the total protein content of said fraction by weight.

Yet further embodiments relate to a method according to the invention, wherein the amounts of alpha lactalbumin and beta lactoglobulin together make up less than 50% of the weight of the CMP which is added in step ii). Specific embodiments relate to the method according to the invention, wherein said CMP is provided in the form of a whey fraction where CMP makes up at least 50% of the total protein content of said fraction by dry weight. Further specific embodiments relate to the method according to the invention, wherein said CMP is provided in the form of a whey fraction where the amounts of alpha lactalbumin and beta lactoglobulin together make up less than 50% of the total protein content of said fraction by weight.

The invention in another aspect relates to a method of reducing staleness, and/or increasing shelf life, and/or increasing softness of a bakery food product. The increase in softness may for example be at least 5%, as compared to the corresponding bakery food product made without CMP; such as for example an increase of at least 10%, at least 15%, at least 20%, at least 25%, at least 30% at least 40% at least 50%, at least 75%, at least 100%; or for example an increase in the range from 5% to 200%, such as from 5% to 175%, 5% to 150%, 5% to 100%, 5% to 80%, 5% to 75%, 5% to 50%; or for example from 10% to 200%, such as 15% to 200%, 20% to 200%, 20% to 150%, 20% to 120%, 30% to 120%, 40% to 120%, 50% to 120%.

The softness may be measured by Texture Profile Analysis. The methods are well-known to person skilled in the art. See further in Example 3 for a brief description.

The bakery food product may be for example a bread as defined herein.

The method of the invention as described herein may also be stated as a method of increasing mixing tolerance in dough.

Furthermore, embodiments of the invention relate to a food product obtained by methods according to the invention, and also to the intermediate dough produced by these methods. The amounts of CMP and other parameters as described and exemplified elsewhere in this description also apply to this method of the invention.

### Increased volume

One particular embodiment relates to a method for stabilising a gluten network according to the invention, wherein the gluten content of the ingredients is low, for example the gluten content is no more than 7%, such as from2 to 7%, 2 to 6%, 2 to 5% by dry weight of the flour or of the total of the ingredients, or for example wherein the only ingredient comprising gluten is a cake flour. Inclusion of CMP in recipes with low gluten content will lead to an increased volume.

Another particular embodiment relates to a method for stabilising a gluten network according to the invention, wherein the gluten content of the ingredients is high, for example the gluten content is not less than 8%, such as from 8 to 18%, 8 to 16%, 8 to 12%, 8 to 10% by dry weight of the flour or of the total of the ingrefients. High gluten content breads tend to stale faster, the inclusion of CMP leads to increased softness (indicated by reduced Peak force in TPA).

### Uses

In a further aspect, the invention relates to the use of casein glycomacropeptide (CMP) to stabilize a gluten network in a food product.

The parameters used to describe the method of stabilising a gluten network in a food product, may also be applied to the use of CMP to stabilise a gluten network in a food product.

In particular embodiments, the invention relates to the use of CMP in the methods of stabilising a gluten network in a food product as described herein The food product may be for example a a bakery food product, a dough, a pasta and any combinations thereof.

Specfic embodiments relate to the use of a composition comprising at least 0.01 g CMP to stabilize a gluten network in a food product, such as 0.01 to 0.8 g CMP/ g gluten; such as for example from 0.03 to 0.8, such as 0.05 to 0.8, 0.08 to 0.8, 0.1 to 0.8; or for example 0.01 to 0.5 g CMP/g gluten, for example from 0.03 to 0.5, such as 0.05 to 0.5, 0.08 to 0.5, 0.1 to 0.5; or for example 0.01 to 0.4 g CMP/g gluten, such as 0.01 to 0.3 g, 0.01 to 0.2, 0.01 to 0.1 g CMP/g gluten.

A further specific embodiment relates to the use of a composition comprising CMP, alpha lactalbumin and beta lactoglobulin to stabilize a gluten network in a food product, wherein the alpha lactalbumin and beta lactoglobulin together make up less than 50% of the CMP by dry weight, such as from 0 to 45%, 0 to 40%, 0 to 35%, 0 to 30%, 0 to 28%, 0 to 25%; or for example from 0.5 to 45%, 0.8 to 45%, 2% to 10 to 40%, 12 to 35%, 15 to 35%, 20 to 35% of the weight of the total CMP content of said composition.

Further embodiments relate to the use of a composition comprising CMP, alpha lactalbumin and beta lactoglobulin to stabilize a gluten network in a food product, wherein the ratio of CMP to (the combined amounts of alpha lactalbumin and beta lactoglobulin) in the composition is in the range from 90:10 to 30:70, such as 80:20 to 30:70, 70:30 to 30:70, for example 60:40 to 30:70. See also example 11.

Further embodiments relate to the use of a composition comprising CMP, alpha lactalbumin and beta lactoglobulin to stabilize a gluten network in a food product, such that the use results in a food product wherein the ratio of CMP to (the combined amounts of alpha lactalbumin and beta lactoglobulin) in the composition according to the invention is in the range from 90:10 to 30:70, such as 80:20 to 30:70, 70:30 to 30:70, for example 60:40 to 30:70.Other embodiments relate to the use of a composition comprising CMP as according to the invention to stabilize a gluten network in a food product, in particular to the use of the compositions described herein under the heading Dry Compositions.

In further embodiments, the invention relates to the use of CMP to increase softness and/or reduce staleness, and/or increase shelf life in a food product, such as a bakery food product, for example a bread.

The use may be for example to increase softness and/or increase shelf life of a bakery food product (for example a bread) at least 5%, such as at least 10%, such as for example at least 15% or at least 20%, at least 25%; or for example from 2 to 50%, 4 to 40%, 3 to 30%: or 5 to 50%, 7 to 50%, 10 to 50 The increase may be for example at one day, 1 to 5 days, 1 to 3 days. 1 to 2 days or for example 1 day after baking.

### Compositions of the invention

The invention relates in a second aspect to a composition comprising gluten and CMP for use in a method of stabilizing a gluten network in a food product according to the invention. In particular embodiments, the composition is obtained when perfoming a method according to the invention.

In specific embodiments, the invention relates to a food product comprising a stabilised gluten network and CMP, said food product being obtained when performing the method of stabilising a gluten network according to the invention.

In other specific embodiments, the invention relates to a composition for use in the method according to the invention, said composition comprising
i) at least one ingredient comprising gluten and
ii) at least one ingredient comprising CMP, wherein said composition comprises CMP in an amount of from 0.01 to 0.45 g CMP/g gluten.

The compositions according to the invention may comprise gluten and CMP in an amount of from 0.01. to 0.45 g CMP/g gluten, such as 0.03 to 0.45 such as 0.05 to 0.45, 0.08 to 0.45, 0.1 to 0.45; or for example from 0.01 to 0.4 g CMP/g gluten, such as from 0.01 to 0.3 g, 0.01 to 0.2, or from 0.01 to 0.1 g CMP/g gluten.

In some embodiments of the composition according to the invention, the combined amount of alpha-lactalbumin and beta-lactoglobulin may be less than 50% of the total protein content; for example the combined amount of alpha-lactalbumin and beta-lactoglobulin in the composition of the invention may be in the range of from 0 to 0.5 g/g gluten, 0 to 0.45 g/g gluten, 0 to 0.25 g/g gluten, such as for example 0 to 0.24 g/g gluten, or for example 0.005 to 0.5 g/g gluten, 0.005 to 0.45 g/g gluten, 0.005 to 0.3 g/g gluten; or 0.005 to 0.25 g/g gluten, such as 0.005 to 0.24 g/g gluten.

Alpha-lactalbumin and beta-lactoglobulin may inhibit the gluten network stabilizing effect of CMP. Therefore, particular embodiments relates to compositions where the amount of alpha-lactalbumin and beta-lactoglobulin present in total in the composition corresponds to less than 50% of the weight of the CMP content of said composition, such as from 0 to 45%, 0 to 40%, 0 to 35%, 0 to 30%, 0 to 28%, 0 to 25%; or for example from 0.5 to 45%, 0.8 to 45%, 2% to 10 to 40%, 12 to 35%, 15 to 35%, 20 to 35% of the weight of the total CMP content of said composition.In other embodiments, ratio of CMP to (the combined amount of alpha lactalbumin together with beta lactoglobulin) in the composition is at least 2:1 (dry weight), for example at least 1:1, or at least 0.9:1, 0.8:1 (dry weight).

For example the ratio of CMP to (the combined amounts of alpha lactalbumin and beta lactoglobulin) in the composition according to the invention may be in the range from 100:0 to 50:50, 90:10 to 50:50, such as 80:20 to 50:50, 70:30 to 50:50 or 60:40 to 50:50.

In some embodiments of the invention, any compositions of the invention is defined by specifying both the composition's CMP-content in relation to gluten content, and the composition's content of alpha-lactalbumin and/or betalactoglobulin in relation to CMP content. The ranges may for example be as specified above.

Said compositions of the invention may be a food product, for example a semi-manufactured food.

The term "semi-manufactured" is used to refer to a food product which is an intermediate; that is, it is sold to the consumer in a form which is not yet its final form, and is processed to the final form by the consumer. Examples of such semi-manufactured foods include food product mixes, such as bread or pastry mixes, or for example doughs which are to be formed and baked by the consumer, and the like.

### Dry compositions

In one embodiment, the compositions of the invention are dry compositions. Dry compositions typically comprise less than 25% (w/w) water, e.g. less than 20% (w/w), less than 19% (w/w), less than 18% (w/w), less than 17% (w/w), less than 16% (w/w) or less than 15% (w/w) water. Such dry compositions may be compositions obtainable as intermediates when performing a method of stabilizing a gluten network in a food product according to the invention, and may thus be obtained by mixing one or more ingredients to be used in the manufacture of a food product with a stabilized gluten network, which are dry ingredients. Thus, the invention in one embodiment relates to a composition for use in the method of stabilising a gluten network in a food product according to the invention, said composition comprising i) at least one ingredient comprising gluten and ii) at least one ingredient comprising CMP, wherein said composition comprises CMP in an amount of from 0.01 to 0.45 g CMP/g gluten, and wherein said ingredients are dry ingredients.

The compositions of the invention relate to embodiments wherein said CMP is present in an amount of from 0.2 to 20 % (w/w) of dry weight, for example from example 0.2 to 15%, 0.2 to 10 %, 0.3 to 10% or 0.5 to 10% (w/w) dry ingredients; such as 1 to 10%, 1 to 8%, 1 to 5% or for example 0.0.2 to 3% (w/w) dry weight.

Some embodiments of the compositions of the invention may comprise at least one flour. Alternatively, in one embodiment, a composition according to the invention consists of CMP and at least one flour.

The at least one flours may be selected from the group consisting of wheat, triticale, rye, barley, oat, buckwheat, spelt, millet, quinoa, soya, corn, rice, potato, almond, hazelnut and coconut. In one specific embodiment the at least one flour comprises or consists of wheat flour.

The wheat flour may be selected from the group consisting of Type 550, Danish wheat bread flour, Reform wheat flour, Manitoba and combinations thereof.

The at least one flours may together have an average gluten content of from 5 to 13%, such as for example, from 8 to 13% content, from 8 to 9%, ; or for example from 10 to 13% by weight.

In one embodiment the at least one flours have together a low gluten content, for example a gluten content which is at most 7%, for example less than 7%, for example no more than 8%, such as no more than 7, 6, 5, 4, 3, 2, 1% by weight of the flour in the mix; or for example from 5 to 7% by weight.

In a further embodiment, the composition according the invention may comprise one or more ingredients, which are selected from the group consisting of a dough improver which is not CMP, an emulsifier, a flavouring agent, a colouring agent, a preparation of gluten, additional gluten, malted wheat flour, leavening agent.

The dough improver which is not CMP may be selected from the group consisting of ascorbic acid, bromate, sodium caseinate, calcium caseinate, sodium stearoyl lactylate (SSL), calcium stearoyl lactylate (CSL), ethoxylated mono- and diglycerides (EMG), polysorbates (PS), succinylated monoglycerides (SMG) DATEM, and enzymes such as one or more of amylase, glucose oxidase, lipase, lipoxygenase, hexose oxidase and xylanase.

A specific embodiment of the invention relates to a composition according to the invention, which does not contain any dough improver other than CMP.

One specific embodiment of this aspect of the invention, is a mix, such as for example a bread mix, a doughnut mix, a sweet yeasted bread mix, a cake mix, a pasta flour.

In another specific embodiment of this aspect, relates to a so called "clean label" mix; i.e., wherein the mix does not comprise any E-number ingredients.

These compositions of the invention may for example sold to the end consumer, such as in the form of for example bread mixes, or may be sold to food makers, who in turn produce and sell the final food product.

These compositions will produce food products, such as bread or bakery food product, with improved texture, as explained.

The addition of CMP as sole dough improver provides a clean label mix. Addition of CMP to mixes allows the use of flours with lower gluten content without comprising the texture of the final product. Lower gluten content may be desirable in order to allow the use of speciality flours with no gluten (such as for example one or more of millet, coconut, almond, hazel nut flours, and the like), and/or the use of flours with low gluten content but which may have other nutritional benefits (such as for example one or more of quinoa, rye, oat, spelt and the like).

Thus, the invention in a further aspect relates to the use of a flour mix with low gluten content and CMP, for example in an amount of 0.01 to 0.5 g CMP per g gluten, for example from 0.03 to 0.5, such as 0.05 to 0.5, 0.08 to 0.5, 0.1 to 0.5; or for example from 0.01 to 0.4 g CMP/g gluten, such as from 0.01 to 0.3 g, 0.01 to 0.2, or from 0.01 to 0.1 g CMP/g gluten to prepare a low gluten content bread.

In this context, the term "low gluten content" means a gluten content of no more than 7% (w/w) gluten, such as no more than 6, 5, 4, 3, 2, 1% (w/w); or for example from 5 to 7% gluten.

In embodiments of a further aspect, the invention relates to use of these compositions of the invention, in particular the use of said compositions to stabilize gluten network in a food product. Particular embodiments of this aspect relate to the use of any of the compositions according to the invention, in a method of stabilizing a gluten network in a food product according to the invention.

### Wet compositions/dough

In other embodiments, the compositions of the invention may be wet compositions such as dough. The compositions according to the invention may comprise one or more aqueous ingredients.

The one or more aqueous ingredients may be selected from water, milk, egg, a milk-derived liquid such as whey, vegetable- or plant-derived juices, and/or combinations thereof. In a specific embodiment of the method of the invention, the one or more aqueous ingredients are selected from water, milk and/or egg.

Further embodiments relate to a composition according to the invention which comprises a CMP-stabilized gluten network formed by a process, said process comprising subjecting said one or more ingredients to hydration and mixing during and/or after addition of said CMP, to form a product comprising a gluten network, such as a food product a food product selected from the group consisting of a bakery food product, a dough, a pasta and any combinations thereof.

Accordingly, embodiments relating to wet compositions/dough may comprise one or more ingredients selected from the group consisting of a dough improver which is not CMP, an emulsifier, a flavouring agent, a colouring agent, additional gluten, leavening agent, malted wheat flour.

Experiments have shown that adding CMP in addition to dough improvers will further improve the texture of the food product.

The dough improver which is not CMP may be selected from the group consisting of ascorbic acid, bromate, sodium caseinate, calcium caseinate, SSL, calcium stearoyl lactylate (CSL), ethoxylated mono- and diglycerides (EMG), polysorbates (PS), succinylated monoglycerides (SMG) DATEM and enzymes such as one or more of amylase, glucose oxidase, lipase, lipoxygenase, hexose oxidase and xylanase.

A specific embodiment of the invention relates to a wet composition/dough according to the invention which does not contain any dough improver other than CMP.

Another embodiment relates to a wet composition/dough according to the invention, wherein the wet composition is a dough, and wherein CMP is present in an amount of from 0.01 to 0.45 g CMP/g gluten, for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

Further embodiments relate to wherein CMP is present in an amount of from for example 0.01 to 0.8 g CMP/ g gluten; such as for example from 0.03 to 0.8, such as 0.05 to 0.8, 0.08 to 0.8, 0.1 to 0.8; or for example 0.01 to 0.5 g CMP/g gluten, such as 0.01 to 0.8 g, 0.01 to 0.7, 0.01 to 0.6, 0.01 to 0.5 g CMP/g gluten.

Further embodiments of the wet composition/dough according to the invention relates to said compositions comprising one or more leavening agents selected from the group of chemical, and biological leavening agents, and/or has been mechanically leavened.

One embodiment of a composition according to invention, relates to a dough consisting of a fat source, wheat flour, sugar, salt, yeast, water, optionally one or more further preservative such as calcium propionate, and CMP, wherein CMP is present in an amount of 0.01 g to 0.45g CMP/g gluten, such as for example from 0.03 to 0.45, such as 0.05 to 0.45, 0.08 to 0.45, 0.1 to 0.45g CMP/g gluten. Examples of other preservatives include calcium propionate, propionic acid, acetic acid.

### Food products

Further embodiments of the invention relates to a composition which is a food product which is selected from the group consisting of a bakery food product, a dough, a pasta and any combinations thereof.

Said composition may for example be obtainable or obtained when performing the method according to the invention.

The invention also relates to a food product comprising a stabilised gluten network, CMP, alpha lactalbumin and beta lactoglobulin, said food product being obtained when performing the method according to the invention and wherein the ratio of CMP to (the combined amount of alpha lactalbumin together with beta lactoglobulin) in the food product is at least 1:1, or at least 0.9:1, 0.8:1 (dry weight); or for example is in the range from 90:10 to 30:70, such as 80:20 to 30:70, 70:30 to 30:70, for example 60:40 to 30:70.

Further embodiments relate to wherein the ratio of CMP to (the combined amount of alpha lactalbumin together with beta lactoglobulin) is in the range from 100:0 to 50:50, such as from 90:10 to 50:50, 80:20 to 50:50, 70:30 to 50:50, 60:40 to 50:50. Further embodiment relate to where said food product comprises an amount of alpha lactalbumin and/or beta lactoglobulin which corresponds to less than 50% of the amount of the CMP in the food product. Said compositions may for example be a bakery food product and CMP may be present in an amount of from 0.01 to 0.45 g CMP/g gluten (w/w), for example from 0.03 to 0.45, such as 0.05 to 0.5, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

Examples of such bakery food product are for example a bread as defined herein.

One embodiment of a composition according to invention, relates to a bread consisting of a fat source, wheat flour, sugar, salt, yeast, water, optionally one or more preservatives (such as calcium propionate, propionic acid and/or acetic acid)fr, and CMP, wherein CMP is present in an amount of 0.01 g to 0.45 g CMP/g gluten, such as for example from 0.03 to 0.45, such as 0.05 to 0.45, 0.08 to 0.45, 0.1 to 0.45 g CMP/g gluten.

In another embodiment, the composition according to the invention may be a pasta, wherein the CMP is present in an amount of from 0.01 to 0.45 g CMP/g gluten (w/w), for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

### Particular food products

### Longer shelf life bakery food products

A bakery food product, such as a bread according to the invention, will have an increased volume, increased softness and increased resilience.

These effects contribute to prolonged softness of the bread, and delays staling.

Bread staling is responsible for significant financial loss for both consumers and producers and every year bread worth many millions of dollars is discarded.

Staling has previously been thought more to be associated with the changes in starch structure during storage. Thus, it was surprising that the stabilizing the gluten network would have such dramatic effect on softness and volume.

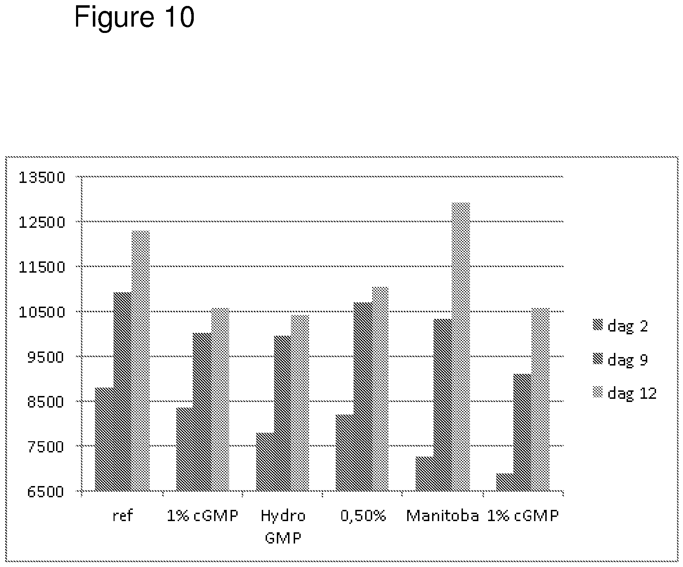

The inclusion of CMP leads to an increased shelf-life of breads, as shown in Figure 10.

Thus, one embodiment of this aspect relates to a food product, for example a bread, comprising a stabilized gluten network and CMP, and wherein the shelf-life is increased by at least 10%, such as at least 15%, for example from 25% to 50%, 25% to 80% as compared to the food product, such as the bread, without CMP.

Alternatively, the increased shelf-life may be specified in number of days with which the shelf-life is extended.

For example, the shelf-life of a bread according to the invention may be extended by at least one, at least 2, at least 3 days, such as for example, from one to 4 days, 1 to 2, 1 to 3, 1 to 4, 1 to 5, 1 to 6, 1 to 7 days as compared to the bread with the same recipe but lacking CMP.

Other embodiments relate to a food product, such as a bread, according to the invention which comprises CMP in an amount of 0.01 to 0.45 g CMP per g gluten, such as for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten and which has an increased shelf life, for example as exemplified above.

Such bakery food products comprising CMP also display an improved sliceability. This leads to less transportation damage and therefore less waste which is an economic advantage.

### Softer breads

***Dilution of gluten network*** When non-gluten containing ingredients are included in a food product which relies on a gluten network for its texture, the gluten network is weakened and the texture of the food product is thereby compromised.

The inclusion of CMP, with or without addition of further dough improvers, can compensate for this weakness.

Thus, one embodiment of this aspect relates to a food product according to the invention which contains less than 9 % gluten based on weight of final product, and which contains 0.01 to 0.045 g CMP/ g gluten;, for example from 0.03 to 0.45, such as 0.05 to 0.45, 0.08 to 0.45, 0.1 to 0.45; or for example from 0.01 to 0.4 g CMP/g gluten, such as from 0.01 to 0.3 g, 0.01 to 0.2, or from 0.01 to 0.1 g CMP/g gluten.

One specific example of this embodiment relates to a bread which contains a low gluten content, and 0.0025 g to 0.45 g CMP/g gluten, wherein the gluten content of the bread is no more than 7%, such as no more than 6%, no more than 5, 4, 3, 2, 1% by weight of the bread.

### Sweetened breads

Dilution of the gluten network may in other examples be due to the inclusion of for example, egg, fats, liquids which have a negative effect on the gluten network.

For example, sweet breads typically include ingredients such as eggs, and butter. These foods will not form a strong gluten network, and the texture of the final bread produced may be compromised. Moreover the dough is more difficult to work with.

Inclusion of CMP in such breads may compensate for dilution, and produce breads with acceptable texture.

Thus, the invention in one embodiment relates to a food product, such as a sweetened bread as defined herein comprising 0.01 to 0.45 g CMP/g gluten. for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

### Breads containing insoluble particles

Other examples of dilution of gluten content relate to food products, such as breads, where coarse and/or insoluble particles are included, such as one or more of seeds, bran, nuts, dried fruit pieces and the like. Such particles can tear the strands of gluten in the gluten network and in this manner compromise the strength of the gluten network.

Inclusion of CMP in such food products may strengthen the gluten network, and produce breads with acceptable texture despite the inclusion of insoluble particles.

Thus, one embodiment of this aspect relates to a food product according to the invention, such as a bread, comprising 0.01 to 0.45 g CMP/g gluten and further comprising one or more types of insoluble particles, for example selected from the group consisting of insoluble fibre (e.g. bran, husks, bark and the like); whole or crushed seeds, nuts, and/or grains; fruit (e.g. dried fruit, berries and the like), and combinations thereof.

Types of bread that may benefit from the inclusion of CMP in order to improve the texture include whole meal bread, high fibre bread, corn bread, hearth breads and mixed grain bread.

### Combinations

The gluten network of a food product may be compromised due to a combination of the above described reasons, for example inclusion of flour with low gluten content, inclusion of other ingredients which dilute the gluten, and/or inclusion of insoluble particles as described above.

One embodiment relates therefore to a food product according to the invention, such as a bread, wherein the gluten network is compromised due to one or more of the following reasons: inclusion of flour with low gluten content, such as one or more of weak flour, cake flour, flour from rye, oat, spelt, etc; inclusion of further ingredients such as eggs, butter, milk, etc; and/or inclusion of insoluble particles such as insoluble fibre (e.g. bran, husks, bark and the like); whole or crushed seeds, nuts, and/or grains; fruit (e.g. dried fruit, berries and the like), and combinations thereof; and wherein the food product comprises CMP in an amount of 0.01 to 0.45 g CMP/ g gluten; for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

### Yeasted Food products

Many of the food products which rely on gluten network for their desired texture, also rely on leavening agents to achieve the desired texture.

For example in bread which is leavened by yeast, air bubbles in the dough are expanded by yeast fermentation. The extensible properties of the gluten network allow this expansion, and the leavening in combination with the gluten network's characteristics contribute to the texture of the bread.

The stabilizing effect of CMP on the gluten network is thus particularly noticeable in food products which are leavened.

When CMP is included, the amount of leavening agent used may also be increased, due to the stronger gluten network. Adjusting the amount of leavening agent is within the skill of the art.

Thus, some embodiments of these aspects relate to a food product comprising a gluten network and CMP, and further comprising one or more leavening agents.

The food product may for example be leavened using biological leavening agents, chemical leavening agents, mechanical leavens or a combination thereof.

Examples of biological leavening agents include yeast, and sour dough. Examples of chemical leavening agents include bicarbonate, monocalcium phosphates (Ca(H2PO4)₂). Other leavening agents developed include sodium aluminum sulfate (SAS), monocalcium phosphate, sodium acid pyrophosphate (SAPP), sodium aluminum phosphates (SALP), sodium bicarbonate.

Examples of mechanical leavening includes high intensity mixing.

Exemplary embodiments include a food product according to the invention comprising a gluten network and CMP, further comprising one or more leavening agents, such as yeast; for example wherein the CMP is present in an amount from 0.01 to 0.45 CMP/g gluten, such as for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten. Examples of such food products may be a bread, for example a sweetened bread as exemplified herein

### Food product comprising one or more additional dough improvers

In order to improve texture of breads, for example to improve shelf-life of bread, conventional dough improvers are used.

However, when the amount of enzymes and emulsifiers included exceeds a certain level, the structure of the breadcrumb is weakened beyond acceptance.

Addition of CMP to a bread containing maximum dosage of enzymes and emulsifiers will extend the softness and shelf-life by 15-25%, without weakening the structure.

Thus, one embodiment of this aspect of the invention relates to a food product, such as a bread, comprising a gluten network and CMP, and further comprising one or more dough improvers.

The dough improvers described are applicable also in this embodiment of this aspect of the invention.

The CMP may be present in an amount of 0.01 to 0.45 g CMP/g gluten, such as for example for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

### Food product which does not contain any additional dough improvers.

As mentioned before, inclusion of CMP by itself can stabilize and/or strengthen the gluten network and improve the texture of a food product such as bread, without contribution of other dough improvers.

Thus, one embodiment of this aspect of the invention relates to a food product according to the invention, such as a bread, comprising a gluten network and CMP, and which does not comprise further dough improvers.

Another embodiment of this aspect relates to a food product, such as a bread, comprising a gluten network and CMP, and which furthermore does not comprise any ingredients which require listing on the ingredient list by E number, such as current EU approved additives; that is, pure forms of the substances are not intentionally added.

Food products which do not contain intentional addition of ingredients which have an e-number, are perceived as more wholesome, and natural by customers. CMP, which is a milk-derived protein, does not have an e-number.

The amount of CMP in these embodiments may be from 0.01 to 0.45 g CMP/g gluten, such as 0.2 to 0.45 g CMP/ g gluten, such as for example for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

### Wheat breads

The inventors have seen particularly good result in breads which are plain, wheat flour based breads, such as for example hamburger buns, and breads used for toast.

In these embodiments, the bread of the invention comprises or consists of: -a source of fat (such as for example oil, shortening, butter or combinations thereof); wheat flour such as wheat bread flour, for example type 550, Danish wheat bread flour, Reform flour, Manitoba or combinations thereof; sugar; salt; yeast; one or more further dough improvers which are not CMP (such as dough improvers mentioned elsewhere herein); one or more preservatives (for example calcium propionate); and CMP.

The CMP may be present in an amount of for example 0.01 to 0.45 g CMP/g gluten.

Alternatively, CMP may be present in amount of 0.2 to 20% w/w of dry ingredients, such as for example 0.2 to 15%, 0.2 to 10%, 0.3 to 10% or 0.5 to 10% (w/w) dry ingredients; such as 1 to 8%, 1 to 5% or for example 0.2 to 3%.

In an example where wheat flour is present in an amount of 2000 g (grams), and water is present in 1100 g, the amount of fat source may be from 30 to 90 g, such as 40 to 80, 45 to 75 or 60 to 80; sugar may be present in an amount from 0 the 100, such as 20 to 80, 40 to 80 or 60 to 80 g; Salt may be present in an amount of from 0 to 50 g, such as 20 to 50 g, such as about 30 g; Yeast may be present in an amount of from 30 to 150 g, such as 50 to 100 g; and CMP may be present in an amount of 5 to 50 grams, such as 5 to 45, 5 to 40, 5 to 35, 6 to 30, 6 to 25, 6 to 25, 6 to 20, 6 to 18, 6 to 15, 6 to 13, 6 to 12, 7 to 12, 8 to 12, 9 to 11 grams, such as about 10 grams.

The recipe may be scaled up, keeping the same ratios of ingredients. One particular embodiment is illustrated in Example 16.

Another example relates to a bread for toast.

In an example where wheat flour is present in an amount of 1200 g and water is present in an amount of 500 g, the fat source may be present in an amount of 30 to 100 g, such as 40 to 90, 50 to 90 or 70 to 80 g; the sugar may be present in an amount of 50 to 200 g, such as 70 to 170, 80 to 110, about 100 g; Salt may be present in an amount of is present in an amount of from 0 to 50, such as 20 to 50, such as about 35; Yeast may be present in an amount of from 30 to 150, such as 50 to 100; CMP may be present in an amount of 5 to 50 grams, such as 5 to 45, 5 to 40, 5 to 35, 6 to 30, 6 to 25, 6 to 25, 6 to 20, 6 to 18, 6 to 15, 6 to 13, 6 to 12, 7 to 12, 8 to 12, 9 to 11 grams, such as about 10 grams.

The recipe may be scaled up, keeping the same ratios of ingredients. One particular embodiment and example is shown in Example 17.

### Soft Rye bread

A further embodiment of compositions of the invention relates to a bread which comprises rye flour, a preparation of wheat gluten protein and CMP, in order to provide a rye bread which has a soft texture.

CMP may be present at an amount of 0.01 to 0.45 g CMP/g gluten for example from 0.03 to 0.45, such as 0.05 to 0.45, 0.08 to 0.45, 0.1 to 0.45; or for example 0.01 to 0.4 g CMP/g gluten, such as 0.01 to 0.3 g, 0.01 to 0.2, 0.01 to 0.1 g CMP/g gluten.

### Further embodiments

Particular embodiments of the compositions of the invention, relate to compositions of the invention, particularly those described under the headings Wet compositions/dough and Food products, which comprise alpha lactalbumin and/or beta lactoglobulin, and wherein the ratio of CMP to (the combined amount of alpha lactalbumin together with beta lactoglobulin) in the composition or food product is at least 2:1 (dry weight), for example at least 1:1, or at least 0.9:1, 0.8:1 (dry weight).

In further embodiments, the ratio of CMP to (the combined amounts of alpha lactalbumin and beta lactoglobulin) in the composition or food product according to the invention is in the range from 100:0 to 30:70, 90:10 to 30:70, such as 80:20 to 30:70, 70:30 to 30:70, for example 60:40 to 30:70. In yet further embodiments, the ratio of CMP to (the combined amounts of alpha lactalbumin and beta lactoglobulin) in the composition or food product according to the invention is in the range from 100:0 to 50:50, such as from 90:10 to 50:50, 80:20 to 50:50, 70:30 to 50:50, 60:40 to 50:50.

The method according to the invention, wherein the composition or food product comprises an amount of alpha lactalbumin and/or beta lactoglobulin which corresponds to less than 50% of the amount of the CMP.

### Method of making a CMP-rich whey fraction

The application further describes a method of preparing a CMP-rich whey fraction suitable for use in methods to stabilise a gluten network in a food product, wherein the method of preparing comprising the steps of
i) providing a milk product comprising micellar casein,
ii) preparing a micellar casein isolate, for example by subjecting the milk product of step i) to microfiltration, yielding a micellar casein isolate,
iii) Optionally adding cream, vegetable oil and/or protein to the micellar casein isolate,
iv) using the micellar casein isolate in a cheesemaking method, wherein the micellar casein is cleaved by rennet and a curd is allowed to form,
v) draining and recovering the whey from the curd formed in the cheesemaking process, which is a CMP-rich whey fraction.

The CMP-rich whey fraction thus formed will be enriched in CMP, which is formed by cleavage of the casein by rennet. The CMP-rich whey fraction will also be depleted of alpha lactalbumin and beta lactoglobulin, which were removed by the microfiltration step. Microfiltration (MF) allows separation of the micellar casein from the alpha lactalbumin/beta lactoglobulin proteins. The micellar casein is found in the MF retentate, while alpha lactalbumin and beta lactoglobulin are found in the MF permeate.

The milk product comprising micellar casein which is provided, may be for example any suitable milk, for example skimmed milk, part skim milk, whole milk, recombined milk or any other suitable milk. The milk may be from for example a mammal selected from cow, horse, goat, buffalo, sheep and camel, though typically cow's milk is used.

In one specific embodiment, the milk product comprising micellar casein is a skimmed milk, in particular a pasteurized skimmed milk.

The pore size of the microfiltration membrane is selected so as to retain micellar casein to provide a micellar casein retentate, and allow alpha lactalbumin and beta lactoglobulin to pass through the membrane. The pore size of the membrane may thus be in the range from 0.05 to 0.3 microns, such as from 0.05 to 0.2, 0.05 to 0.15, such as approximately 0.1 microns.

In some embodiments, microfiltration is as a warm microfiltration, performed at a temperature between 40 and 60 °C, such as 45 to 55 °C, such as 48 to 54 °C, such as at about 50 °C.

In some embodiments, the micellar casein isolate is subsequently subjected to a second microfiltration with a larger pore size, selected such that it will remove microrganisms and/or spores. The pore size of the membrane in this MF may thus be in the range from 0.5 microns to 3 microns, such as from 0.5 to 2.5, 0.5 to 2 microns, 1 to 2 microns, 1.2 to 1.6 microns, such as about 1.4 microns. The second MF may also be perfomed as a warm microfiltration.

Thus, in some embodiments the method comprises the steps:
i) providing a milk product comprising micellar casein as a starting product, wherein the milk is pasteurized, skimmed milk,
ii) subjecting the milk product of i) to microfiltration, yielding a micellar casein isolate, wherein the microfiltration is a warm microfiltration performed at a temperature between 40 and 60°C, such as 45 to 55°C, such as 48 to 54°C, such as at about 50°C and the pore size of the membrane is in the range from 0.05 to 0.3 microns, such as from 0.05 to 0.2, 0.05 to 0.15, such as approximately 0.1 microns;
iii) Optionally adding cream, vegetable oil and/or protein to the micellar casein isolate,
iv) using the micellar casein isolate in cheesemaking, wherein the micellar casein is cleaved by rennet and a curd is allowed to form,
v) draining and recovering the whey from the curd formed in the cheesemaking process, which is a CMP-rich whey fraction.

In particular embodiments, step i) of providing a milk product comprising micellar casein as a starting product comprises the substeps:
a) pasteurizing a skimmed milk (for example at 50 to 74 °C, 60 to 74 °C, or 65 to 74 °C)
b) subsequently bringing the pasteurized skimmed milk to a temperature of 50 to 70 °C, (such as 50 to 60 °C, 50 to 55 °C, or about 55 °C)
c) and optionally holding at the temperature in b) for a time in the range of from 1 minute to 60 minutes, such as from 1 to 50 mins, 1 to 40 mins, 1 to 30 mins, 1 to 20 mins, 1 to 15 mins, 1 to 10 mins, such as 1 to 5 mins.

In further embodiments one or both of the microfiltration(s) may be a microfiltration/diafiltration, for example using water as a diluent. In particular embodiments, at least the first microfiltration (separation of micellar casein from alpha lactalbumin/beta lactoglobulin) is performed as a microfiltration/diafiltration. In the context of this application the term microfiltration/ultrafiltration means a microfiltration process in which the MF retentate is diluted and re-microfiltered.

In a further embodiment, the MF permeate (from either of the microfiltrations) may be ultrafiltrated. In further embodiments, the ultrafiltration permeate is fed back and used as a diluent in the microfiltration/diafiltration. In yet further embodiments, the method comprises further steps of reverse osmosis of the ultrafiltration permeate; the Reverse osmosis water may be fed back and used as a diluent in the microfiltration/diafiltration.

Thus, the application describes the CMP-rich whey fraction obtainable or obtained by the method.

The CMP-rich whey fraction obtained by the method described above may further be spray dried.

The application further relates to the use of the CMP-rich whey fraction obtainable or obtained by the method, in a method to stabilise a gluten network in a food product according to the invention, such as in any of the methods of stabilising a gluten network described herein.

The application further relates to the use of the CMP-rich whey fraction obtainable or obtained by the method, in preparing compositions for use in a method to stabilise a gluten network in a food product according to the invention, such as in any of the methods of stabilising a gluten network as described herein. Such compositions for use may be as described herein. Alternatively, the compositions for use in the methods of stabilising a gluten network in a food product according to the invention are made using CMP-rich whey fraction obtainable or obtained by the above method.

### Examples

### Example 1-Effect of CMP in conjunction with bread flour and cake flour respectively

Breads were prepared using different flours which varied in the gluten content, with and without addition of CMP.

The CMP was provided in the form of a CMP-containing fraction, as described in Example 14 (LacProdan 10). The content of the CMP was about 60- 75 % by dry weight.

The method used in the following examples for baking bread was so-called "all in", i.e. all ingredients are added in the first step, and comprised the steps:
- Scaling of ingredients.
- Development of the dough by physical agitation (mixing) of ingredients in a water mixture until optimal development.
- Dividing, shaping (molding), proving and baking;
- De-panning and cooling.

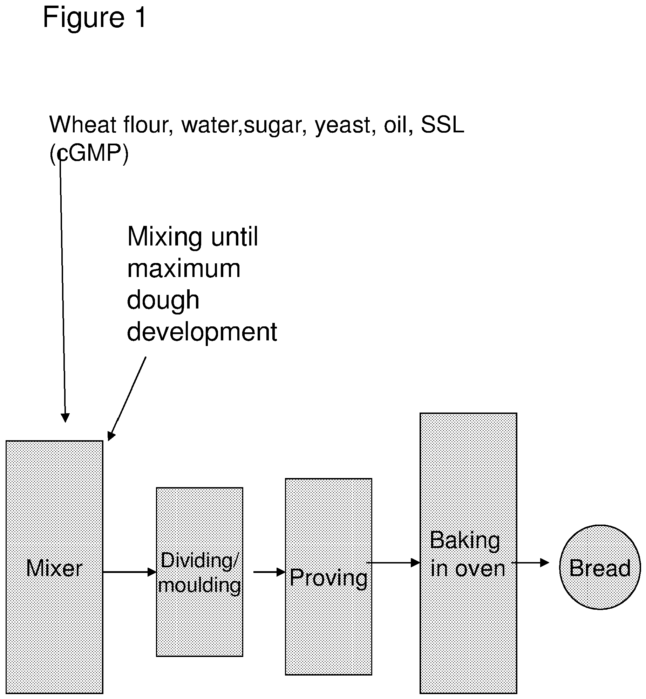

An overview of standard method of baking the bread is given in Figure 1. Breads which are to be tested using Texture Profile Analysis are made in in closed tin (or moulds), while breads for experiments where volume is measured are made in open tins.

Table 1 gives the ingredients of the breads. The results are displayed in Figure 2.

As can be seen from the Table 1, as well as figure 2, the addition of CMP results in an increased volume. Volume measurement was performed by Rapeseed displacement as measured according to the AACC Method 10-05.01 titled Guidelines for Measurement of Volume by Rapeseed Displacement, published in Approved Methods of Analysis 11th Edition.

**Table 1: Effects on inclusion of CMP on breads made with cake resp bread flour.**

| *See also* *Figure 2**.* | | | | | | |
|---|---|---|---|---|---|---|
| | Cake flour | Bread flour | Cake/CMP | Bread/CMP | 50/50 flour | 50/50 CMP |
| INGREDIENTS (g) | 1 | 2 | 3 | 4 | 5 | 6 |
| CMP | 0 | 0 | 20 | 20 | 0 | 20 |
| Bread flour | 0 | 2000 | 0 | 2000 | 1000 | 1000 |
| Cake flour | 2000 | 0 | 2000 | 0 | 1000 | 1000 |
| Dry yeast | 45 | 45 | 45 | 45 | 45 | 45 |
| Salt | 30 | 30 | 30 | 30 | 30 | 30 |
| Oil | 80 | 80 | 80 | 80 | 80 | 80 |
| Sugar | 80 | 80 | 80 | 80 | 80 | 80 |
| Water | 1125 | 1150 | 1125 | 1150 | 1137 | 1137 |
| Dough Temp (°C) | 26.3 | 27 | 27.1 | 27.3 | 27.1 | 26.3 |
| Dough Weight | 400 g | 400 g | 400 g | 400 g | 400 g | 400 g |
| Bread Volume (ml) | 1200 | 1600 | 2175 | 1775 | 1525 | 1650 |

### Conclusions

The water level increased in the food product by 2.5% when the flour was switched from cake to bread flour.

CMP has a good effect on bread flour, and an extreme effect on cake flour. This may be due to the fact that the effect of CMP on a weak gluten network (cake flour) is more noticeable than its effect on an already strong network (bread flour).

### Example 2-Conversion of weak flour to bread baking quality

Sample breads were baked using a flour blend consisting of 50% bread flour and 50% Cake flour. Sample 9 is baked using 100% bread flour (Danish bread flour, protein content 12%, gluten content about 10%).

The breads were baked using the same method as described in Example 1.

Evaluation of crumb structure was performed according to AACCI Method 10-12.01 titled Guidelines for scoring Experimental Bread, and published in the AACC Approved Methods of Analysis 11th Edition.

Volume was measured as in Example 1.

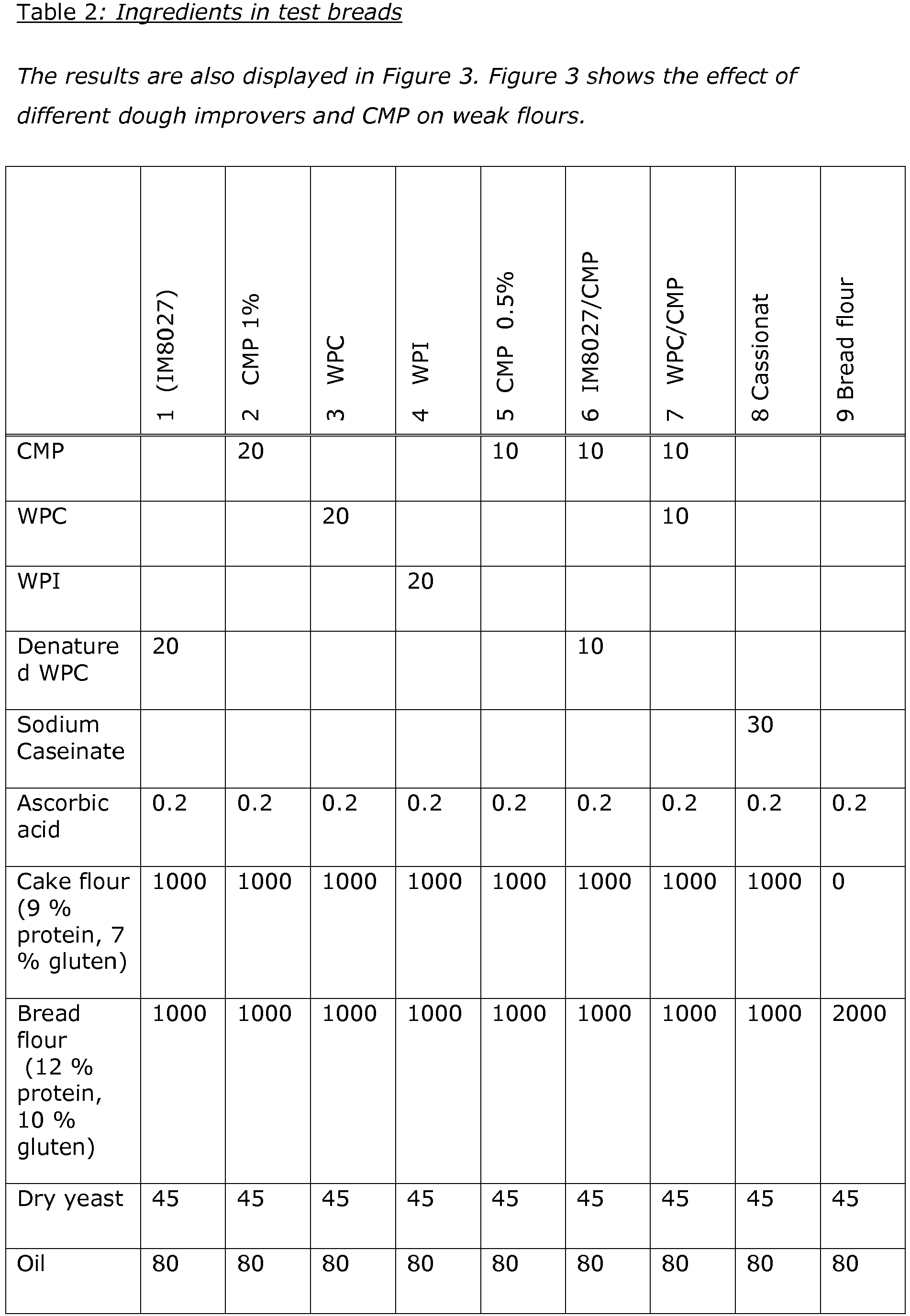

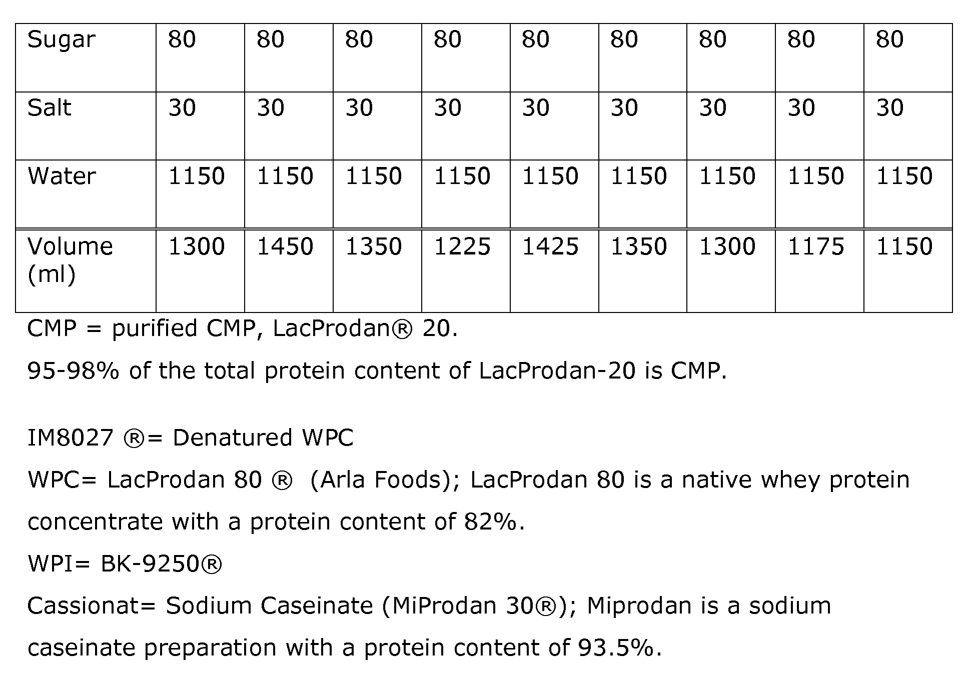

### Conclusions from Table 2

All breads produced had a greater volume than reference. Thus, inclusion of CMP increases volume of the sample breads as compared to the negative control (Sample 9, Bread flour).

Further, crumb structure is finer when CMP is included, as compared to the reference bread.

Calcium caseinate is also known as a dough improver. Without wishing to be bound by theory, it is thought that calcium caseinate may improve texture in a food product by binding water. However, caseinate does not lead to a stronger gluten network to the same extent as the inclusion of CMP, as is shown by comparative experiments in Example 2.

### Example 3- Effect of CMP in conjunction with whole wheat flour

Sample breads were prepared using a whole wheat flour (Graham flour) and bread flour. Samples 3 and 5 also include DATEM.

Graham flour is a coarsely milled wheat flour, where the whole grain is milled, and contains the bran, germ and endosperm of the wheat kernel.

The samples were prepared according to the same method as described in Example 1.

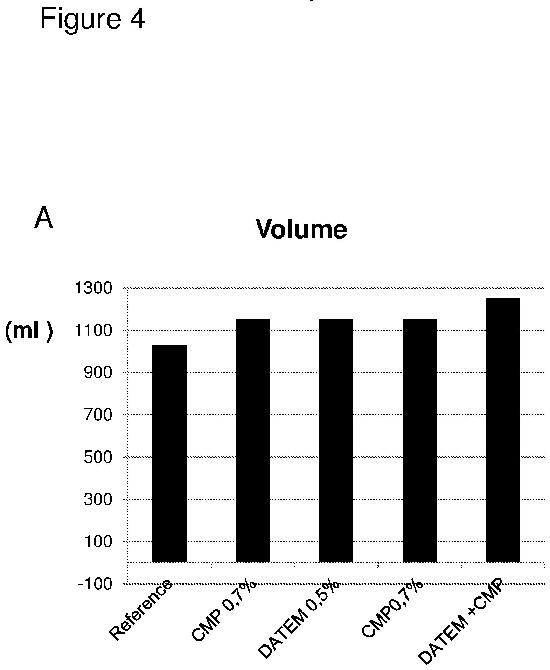

Volume was measured in the same way as in Example 1 (see Figure 4A)
Softness and resilience were measured by Texture Profile Analysis (TPA measurements). Breads were made according to Example 1, in closed tins and a sample from the middle of the bread is removed and subjected to Texture Profile Analysis.

Texture Profile Analysis is a well-known double compression test for determining the textural properties of foods. During TPA, samples are compressed twice using a texture analyzer to provide insight into how samples behave when chewed. The texture analyser apparatus used in the present examples was a TA.XTPlus Texture Analyser from Stable Micro Systems (Stable Micro Systems Ltd., Vienna Court, Lammas Road, Godalming, Surrey GU7 1YL, UK) and the data generated was analysed using the Texture Exponent Software. See Table 3A below for the settings used.

In-depth explanation of the parameters and their calculations are available at the home pages www.texturetechnologies.com, and in particular at http://texturetechnologies.com/texture-profile-analysis/texture-profile-analysis.php.

The tests in the examples were performed with the following parameters:

**Table 3A: Settings for Texture Profile Analysis.**

| Parameter | Value |
|---|---|
| Strain | 40% |
| Pre-speed | 1.0 mm/s |
| Test speed | 1.7 mm/s |
| Post test speed | 10 mm/s (double compression) |
| Probe | P/35 metal (Aluminium) |
| Load cell | 5 kg |
| Sample thickness | Bread was cut in 25 mm slices |

### Resilience

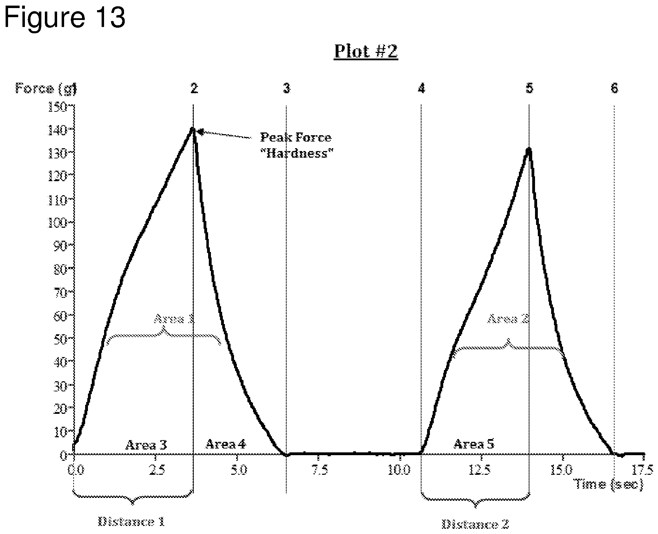

Briefly, resilience is a measure of the is how well a product "fights to regain its original height" after a compression. It is calculated by dividing the upstroke energy of the first compression by the downstroke energy of the first compression. This corresponds to Area 3 (Area under the curve from start of compression to Peak force) divided by Area 4 (area under the curve from peak force to probe withdrawal). See further Figure 13.

### Peak force

Softness in the present application corresponds to the measurement Hardness in Texture Profile Analysis. The Hardness value is the peak force that occurs during the first compression (indicated in Figure 13). An increased peak force is termed an increased Hardness, or reduced Softness.

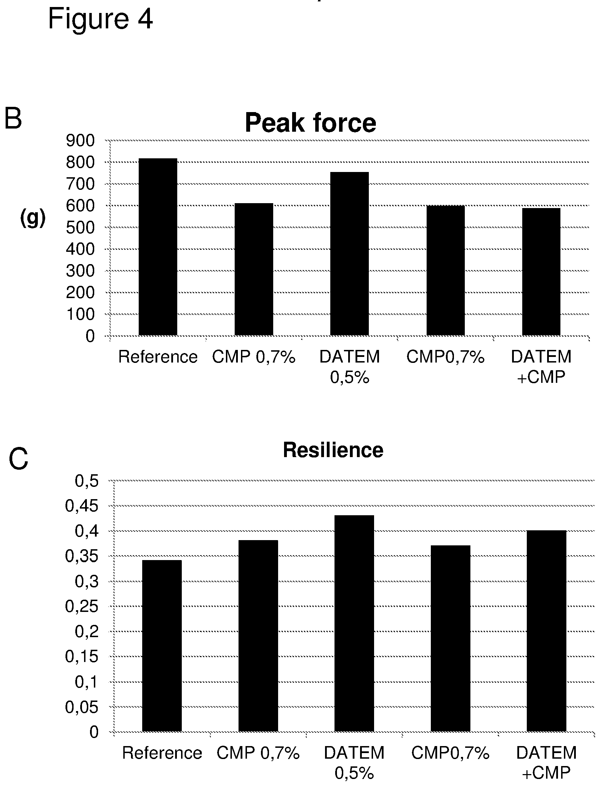

The resulting breads all presented similar crumb structure and crust colour as the negative control. However, softness was increased, i.e. the Peak force was decreased, see Fig 4B). The resilience was the similar to the negative control.

TPA measurements show less compression force is needed for a certain compression distance in the crumb (i.e., increased softness). The same TPA measurements show springiness and resilience are alike (despite more softness) with or with out cGMP.

**Table 3B: Sample breads comprising CMP in whole grain wheat flour.**

| *See also* *figure 4**.* | | | | | |
|---|---|---|---|---|---|
| | Negative Control | | | | |
| INGREDIENTS (g) | 1 Reference | 2 CMP 0.7% | 3 DATEM 0.5% | 4 CMP 0.7% | 5 DATEM+ CMP |
| CMP | | 14 | | 14 | 14 |
| DATEM | | | 9 | | 9 |
| Ascorbic acid | 0.35 | 0.35 | 0.35 | 0.35 | 0.35 |
| Whole grain flour | 1400 | 1400 | 1400 | 1400 | 1400 |
| Bread flour | 400 | 400 | 400 | 400 | 400 |
| Dry yeast | 40 | 40 | 40 | 40 | 40 |
| Salt | 36 | 36 | 36 | 36 | 36 |
| Butter | 80 | 80 | 80 | 80 | 80 |
| Sugar | 60 | 60 | 60 | 60 | 60 |
| Water | 1050 | 1050 | 1050 | 1050 | 1050 |
| Weight (dough, g wet weight) | 3066 | 3080 | 3075 | 3080 | 3089 |
| Weight, Bread | 400 | 400 | 400 | 400 | 400 |
| Volume (ml) | 1025 | 1150 | 1150 | 1150 | 1250 |

**Table 3C Results**

| | Reference | CMP 0,7% | DATEM 0,5% | CMP0,7% | DATEM +CMP |
|---|---|---|---|---|---|
| Volume (ml) | 1025 | 1150 | 1150 | 1150 | 1250 |
| Peak force (g) | 817 | 610 | 754 | 599 | 587 |
| Resilience (unitless) | 0,34 | 0,38 | 0,43 | 0,37 | 0,4 |

See also Figure 4.

### Conclusions Example 3

The results show that the crumb structure is not changed, but crumb softness and volume is increased. Resilience is the same as the reference.

In view of that the volume of the products comprising CMP is increased, the fact that the resilience remains similar even though the volume is greater, can be taken as evidence for a stronger gluten network.

### Example 4- Trial with direct and intermediated prove

Sample breads were prepared using Danish wheat bread flour according to the following method:
Direct prove: the dough was prepared and allowed to develop (leaven) fully,
and thereafter baked.

Intermediate prove: The dough was prepared and allowed to develop to 75%. The dough was frozen and later thawed again and allowed to develop (leaven) further; and thereafter baked.

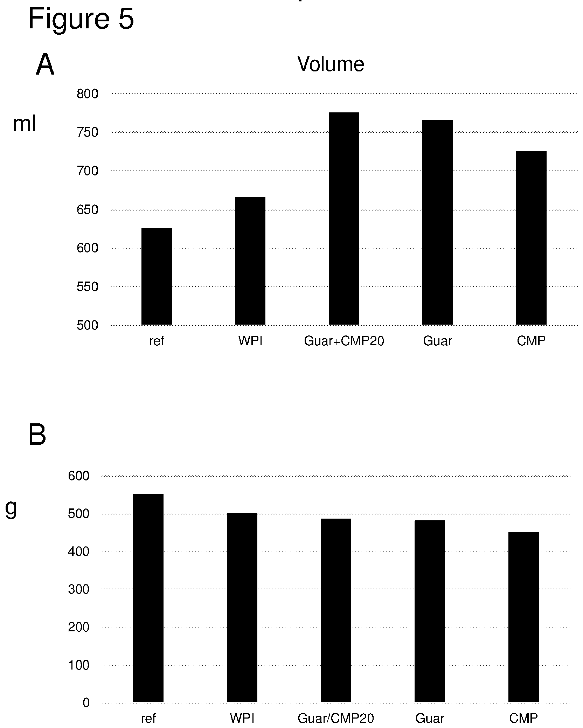

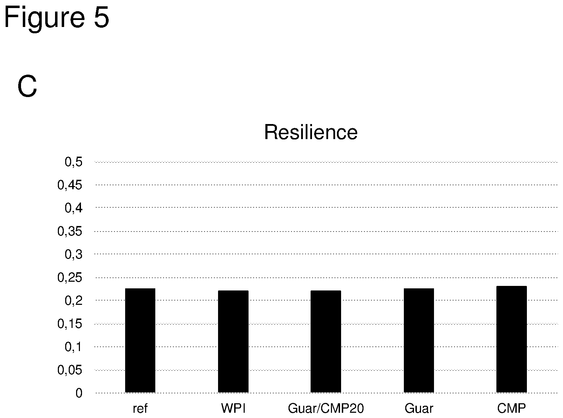

The ingredients are shown in Table 4. See also figures 5A, B, C.

**Table 4: Toast bread recipe**

| INGREDIENTS (g) | 1 Ref | 2 WPI | 3 Guar+CMP | 4 Guar | 5 CMP |
|---|---|---|---|---|---|
| CMP | | 10 | 5 | | 10 |
| Guar gum | | | 10 | 10 | |
| WPI | | 10 | | | |
| SSL veg 45 | 10 | 10 | 10 | 10 | 10 |
| Bread Flour (12 % protein; 10 % gluten) | 2000 | 2000 | 2000 | 2000 | 2000 |
| Dry yeast | 40 | 40 | 40 | 40 | 40 |
| Salt | 30 | 30 | 30 | 30 | 30 |
| Oil | 80 | 80 | 80 | 80 | 80 |
| Sugar | 80 | 80 | 80 | 80 | 80 |
| Water | 1100 | 1100 | 1100 | 1100 | 1100 |
| Dough Temp (°C) | 29.6 | 31.8 | 28.9 | 33.1 | 33 |
| Dough Weight (g) | 3340 | 3350 | 3355 | 3350 | 3350 |
| Volume (ml) | 1000 | 1125 | 1125 | 1125 | 1250 |

A part sample of the doughs were frozen, thawed, and baked after 10 days, and the volume measured as described in Example 1. The results are shown in figure 5A.

Texture profile analyses were performed on the breads prepared, after 2 days. The force required to compress the breads fixed distance (max force, g) is indicated in the figure 5B.

As is shown, more force is required to compress the Reference bread, while inclusion of CMP on its own gives the softest (requires least force) bread.

Part of the softness effect may be attributed to the increased volume of the CMP breads. Stabilised gluten networks will support formation of larger air (or gas) inclusions, i.e. bubbles, formed in leavening. The larger bubbles will contribute to increased volume, and also will require less force to compress.

This difference between CMP-comprising breads and the reference breads will increase over time between 2 to 10 days (see Figure 10, where it can be seen that the difference between Reference and 1% cGMP increases at Day 2 and Day 9).

The resilience of the test breads were also measured, according to the method described in Example 1 (see Figure 5C). The resilience of the test breads remains the same or similar.

### Conclusions Example 4

Inclusion of WPI (whey protein isolate) will not give the same effect as inclusion of CMP, leading to lower volume increase (Fig. 5A), and does not improve the texture as much as CMP does (Fig. 5B). Even though WPI does comprise CMP, it also contains the proteins alpha lactalbumin and beta lactoglobulin which are believed to at least partially inhibit the formation of gluten network, and thus do not allow the full CMP effect to take place.

It can also be seen from the results that CMP may be added "on top" of the known dough conditioners, to further improve the volume.

The resilience of the different breads were comparable. As explained above, this could in fact represent an increase in gluten network strength.

### Example 5- CMP inclusion in sweet yeasted breads

Effect of inclusion of CMP was tested in a brioche recipe, which is an example of a sweet yeasted bread. The recipe is displayed below in Table 5.

**Table 5: Brioche recipe with inclusion of CMP**

| INGREDIENTS | Reference | 1 (WPI) | 2 (CMP) |
|---|---|---|---|
| CMP | | | 10 |
| WPI | | 10 | |
| Bread flour (12 % protein; 10 % gluten) | 1150 | 1150 | 1150 |
| Dry yeast | 40 | 40 | 40 |
| Salt | 25 | 25 | 25 |
| Butter | 200 | 200 | 200 |
| Sugar | 100 | 100 | 100 |
| Water | 400 | 400 | 400 |
| Skimmed milk protein | 50 | 50 | 50 |
| Whole eggs | 200 | 200 | 200 |
| Calcium propionate | 4 | 4 | 4 |

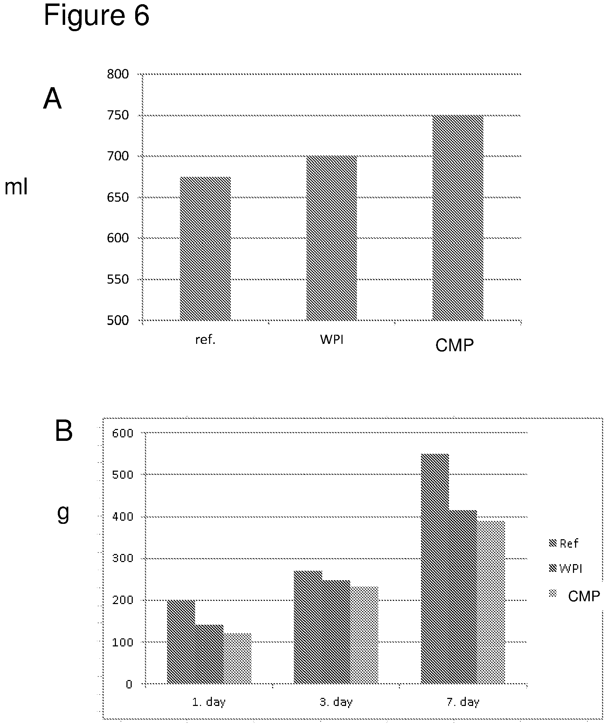

The resulting brioches were tested for volume (ml) according to the method described in Example 1, and the results are shown in Figure 6A.

Texture profile analyses were also performed as described in Example 1, and these results are shown in Figure 6B.

The inclusion of CMP led to a distinct increase in the softness in breads comprising CMP as compared to the reference, where the difference increases over time (see Fig. 6B).

Volume measurements indicate that the inclusion of CMP leads to an increase in the volume of the product as compared to both reference brioche and brioche comprising WPI.

It is likely that part of the increased softness is due to increased volume.

### Example 6: Comparative farinographs showing performance of flour during mixing.

A dough was prepared by mixing distilled water with flour and agitation.

The flour was a German wheat flour Type T 550. The protein content of this flour is 12 %
Farinographs were registered using a Farinograph (Farinograph® - AT, from Brabender)
The method for measurement of farinographs was performed according to the AACC Method 54-22.01 titled Rheological Behavior of Flour by Farinograph Constant Dough Weight Procedure, published in Approved Methods of Analysis 11th Edition.

As can be seen from the farinograph (see Fig. 7A), after 2 mins the dough is developed and the resistance to mixing is already decreasing, indicating the destruction of dough and breakdown of gluten network.

The farinograph in Figure 7B shows the process when 2% CMP is added to the flour. In contrast to what was seen without CMP, the addition of CMP leads to a great increase in the mixing tolerance. After 2 mins the dough is developed, but in contrast to what was seen without CMP, the addition of CMP leads to a great increase in mixing tolerance, and no destruction of the dough/gluten network. Indeed, destruction is seen first after 10 minutes of mixing.

Experiments have also been done with 0.25% CMP, 0.5% and 1.0% CMP and show the same results, i.e. that declination of the curve which is seen for flour without addition of CMP, is eliminated when CMP is added. Table 11 shows the relevant time points.

**Table 11**

| Sample | Arrival Time (minutes) | Departure Time (minutes) | Stability (minutes); (AT-DT) | Peak Time (minutes) | BU at Peak Time | BU at PT+5 mins | MTI |
|---|---|---|---|---|---|---|---|
| Ref | 2.25 | 5.5 | 2.75 | 3.25 | 540 | 480 | 0.11 |
| 0.25% CMP | 0.75 | 14.5 | 13.75 | 1.75 | 610 | 570 | 0.06 |
| 0.5% CMP | 1.5 | 14 | 12.5 | 2.5 | 580 | 560 | 0.03 |
| 1% CMP | 1.25 | 13 | 11.75 | 1.75 | 560 | 540 | 0.04 |

| | | | | | | | |
|---|---|---|---|---|---|---|---|
| CMP was provided as Lacprodan© 20 | | | | | | | |

### Definitions.

Arrival time (AT) - The time it takes to reach the target water to flour ratio, set to 500 Brabender Units (BU). This is the rule of thumb for desired taste, texture and dough performance in baking and proofing of bread.

Peak time (PT) - The time required to reach the maximum viscosity (highest point on the curve). Mixing past this point leads to gluten strand to break down.

Departure time (DT)- The point in time at which the top of the curve goes below the 500 BU line. This point is generally considered the point at which gluten is breaking down and dough has become over mixed.

Stability time (ST)- The interval between arrival time and departure time
Mixing tolerance index (MTI)- The difference from the curve at PT and the value at 5 minutes after PT. The formula is (((BU at PT) - (BU at PT+5 mins)) /BU at PT). This formula yields the percentage BU lost over time. This is used by bakers to determine the amount that a dough will soften over a period of mixing.

An example of a farinograph is showed in figure7A and B.

### Example 7- Comparative extensographs showing resistance to stretching (elastic modulus)

A Brabender® Extensograph® (available from Brabender® GmbH &Co. KG Kulturstr. 51-55; 47055 Duisburg; Germany) was used for measuring the stretching properties of the dough, in particular the resistance to extension and the extensibility. The Extensograph®-E shows the influence of dough improvers such as ascorbic acid, enzymes (proteinases), and emulsifiers and, permits to determine the rheological properties of each flour.

A sample dough was prepared by mixing flour, with and without inclusion of CMP, distilled water and salt. After proving, the dough was stretched until rupture in the Extensograph. The force required is measured and recorded.

Extensographs were registered after resting times of 45 min, 90 min and 135 mins respectively. Two samples were measured for each time point. Samples measured at times 45 and 90 minutes reach over 700 BU (Brabender Units). The samples measured at 135 mins for both with and without CMP reach 500 and 600 BU.

The results are shown in Figures 8A (Flour+ 2% salt) and 8B (Flour + 2% salt + 2% CMP).
. From the results it can be seen that the inclusion of CMP leads to a dramatic increase in the resistance to stretching (elastic modulus) of the dough comprising CMP as compared to that without CMP, in particular for samples measured at 45 and 90 minutes. This increase indicates the strengthening of the gluten network.

### Example 8- Thin Layer Chromatography of samples

Standard thin layer chromatography was performed on CMP -containing samples, which is a CMP containing fraction derived from a sweet whey.

**Table 6**

| Sample | beta | alpha | CMP | F | % beta | % alpha | % CMP | % sum |
|---|---|---|---|---|---|---|---|---|
| number | areal | areal | areal | | | | i | |
| A | 22213308 | 7258542 | 11003503 | 679,35 | 27,7 | 7,0 | 13,5 | 48,3 |
| B | 21818349 | 7096120 | 10804450 | 695,41 | 27,9 | 7,0 | 13,6 | 48,5 |
| C | 23601354 | 7638459 | 11731811 | 626,57 | 27,1 | 6,8 | 13,3 | 47,3 |
| D | 21302360 | 6546091 | 9853455 | 683,06 | 26,7 | 6,4 | 12,2 | 45,3 |

| | | | | | | | | |
|---|---|---|---|---|---|---|---|---|
| Beta= Beta lactoglobulin; Alpha= Alpha lactalbumin | | | | | | | | |

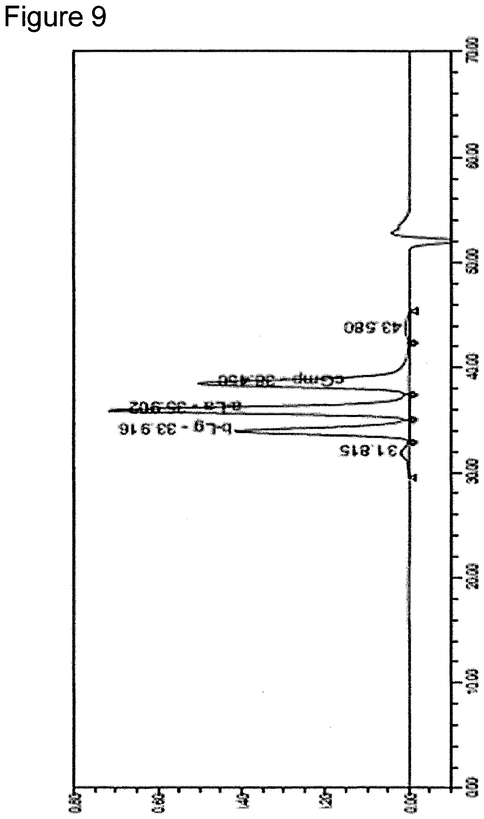

The chromatograph for sample A is shown in Figure 9.

### Example 9- A bread mix

A bread mix with the following ingredients is prepared:

| Ingredient | Amount (g) |
|---|---|
| Wheat flour (12 % protein; 10 % gluten) | 50 |
| Durum wheat flour | 20 |
| Rye flour | 25 |
| Salt | 1.5 |
| Sour dough starter | 0.5 |
| Oil | 2.0 |
| DATEM (E472e) | 0.15 |
| Mono- and diglycerides of fatty acids (E471) | 0.25 |
| Ascorbic acid | 0.01 |
| CMP | 0.5 |
| SUM | 100 |

### Example 10- Effect of CMP

A bread was made according to the method described in Example 1.

The ingredients of the bread are described below in Table 8.

**Table 8 Ingredients**

| Ingredients (g) | Ref | CMP 0.5% | CMP 1.0% | CMP 1.5% |
|---|---|---|---|---|
| Oil | 80 | 80 | 80 | 80 |
| Sugar | 80 | 80 | 80 | 80 |
| Flour | 2000 | 2000 | 2000 | 2000 |
| Salt | 30 | 30 | 30 | 30 |
| Dry yeast | 40 | 40 | 40 | 40 |
| SSL | 5 | 5 | 5 | 5 |
| CMP | | 10 | 20 | 30 |
| water | 1150 | 1150 | 1150 | 1150 |
| Weight | 3385 | 3395 | 3405 | 3415 |
| Dough temp | 28.4 | 27.8 | 28 | 27.6 |

| | | | | |
|---|---|---|---|---|
| CMP is added in the form of Lacprodan20©. The flour is Reform flour and contains 9 to 11 % gluten. SSL = sodium stearoyl lactylate. | | | | |

Peak force was measured by Texture Profile Analysis as described above.

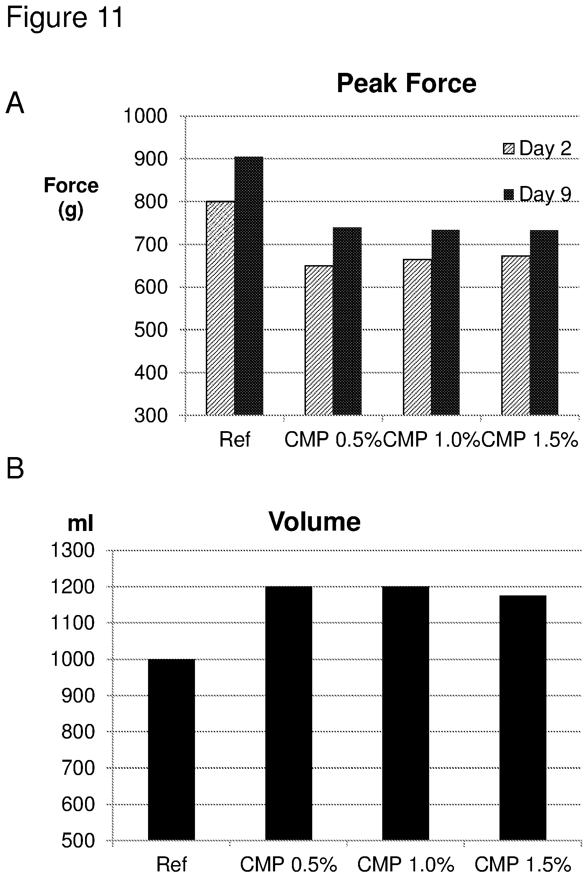

As can be seen from figure 11A, the force required to compress a bread a certain distance, is less for a bread comprising CMP in comparison to the Reference bread. Furthermore, it can be seen that increasing the amount of CMP in the bread beyond 1 % CMP does not further increase the softness of the bread, neither at Day 2 nor Day 9. Also, inclusion of higher amounts of CMP does not produce deleterious effects.

This experiment further demonstrates that bread comprising CMP also remains softer than the reference bread over time.

Volume was measured as described above in Example 1 using Rapeseed Displacement. The bread was made in an open mould, and the weight of the dough prior to baking was the same for all samples, 400g.

Figure 11B shows the volume results. It can be seen that CMP 0.5, CMP 1 and CMP 1.5 all increased the volume of the bread considerably over that of the reference bread.

### Example 11- Dilution experiments

To study the interference of alpha lactalbumin + beta lactoglobulin on CMP effect, a seried of sample breads were made with increasing amounts of alpha lactalbumin+ beta lactoglobulin in relation to amount CMP.

The breads were baked in standard manner (see Example 1). The ingredients are given below in Tables
As usual, experiments where softness is measured are performed in closed tin (or moulds), while experiments where volume is measured are performed in open tins.

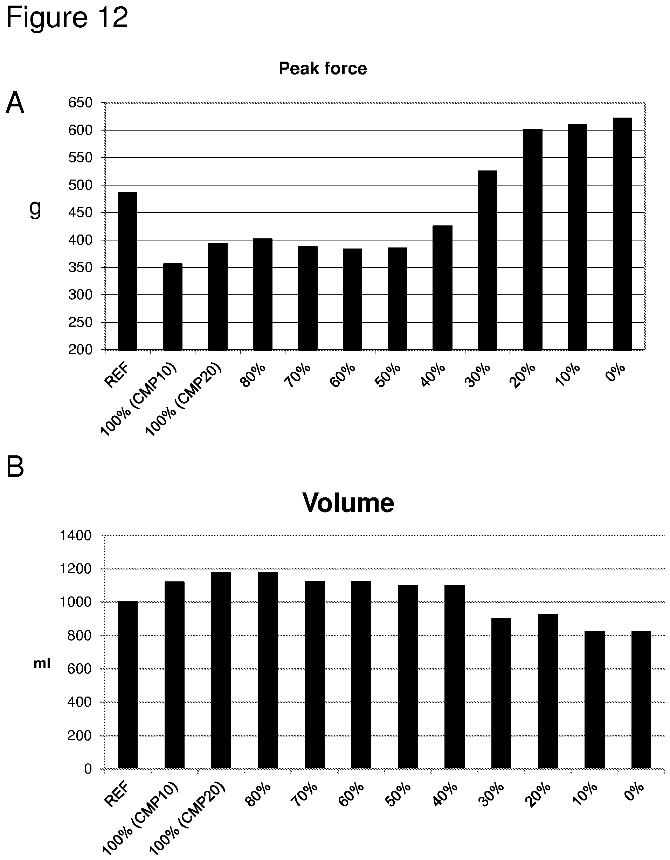

The softness was measured by TPA analysis and the results shown in Figure 12A.

The volume was measured by Rapeseed oil displacement as described above and the results are shown in Figure 12B.

**Table 10A: Ingredients**

| SAP | 104482 | 104483 | 104484 | 104485 | 104486 | 104487 |
|---|---|---|---|---|---|---|
| | REF | CMP 10 | CMP 20 | 20% | 30% | 40% |
| | 1 | 2 | 3 | 4 | 5 | 6 |
| Oil | 100 | 100 | 100 | 100 | 100 | 100 |
| Sugar | 80 | 80 | 80 | 80 | 80 | 80 |
| Flour | 2000 | 2000 | 2000 | 2000 | 2000 | 2000 |
| Salt | 30 | 30 | 30 | 30 | 30 | 30 |
| Dry yeast | 40 | 40 | 40 | 40 | 40 | 40 |
| SSL | 5 | 5 | 5 | 5 | 5 | 5 |
| (ALA+BLG) | | | | 2 | 3 | 4 |
| CMP 10 | | 10 | | | | |
| CMP 20 | | | 10 | 8 | 7 | 6 |
| Water | 1150 | 1150 | 1150 | 1150 | 1150 | 1150 |
| | | | | | | |
| Dough temp | 26,5 | 26,9 | 26,9 | 28,8 | 26,9 | 28,2 |
| DOugh weight 950gram | | | | | | |

| | | | | | | |
|---|---|---|---|---|---|---|
| (ALA+BLG)= protein fraction prepared from whey, where the protein consists of alpha lactalbumin and beta lactoglobulin. | | | | | | |

**Table 10B: Ingredients, cont'd**

| SAP | 104488 | 104489 | 104490 | 104491 | 104492 | 104493 |
|---|---|---|---|---|---|---|
| | 50% | 60% | 70% | 80% | 90% | 100% |
| | 7 | 8 | 9 | 10 | 11 | 12 |
| Oil | 100 | 100 | 100 | 100 | 100 | 100 |
| sugar | 80 | 80 | 80 | 80 | 80 | 80 |
| flour | 2000 | 2000 | 2000 | 2000 | 2000 | 2000 |
| Salt | 30 | 30 | 30 | 30 | 30 | 30 |
| Dry yeast | 40 | 40 | 40 | 40 | 40 | 40 |
| SSL | 5 | 5 | 5 | 5 | 5 | 5 |
| (ALA+BLG) | 5 | 6 | 7 | 8 | 9 | 10 |
| CMP 10 | | | | | | |
| CMP 20 | 5 | 4 | 3 | 2 | 1 | |
| Water | 1150 | | 1150 | 1150 | 1150 | 1150 |
| | | | | | | |
| Dough temp | 27,1 | 28,5 | 27 | 28,1 | 28 | 27,8 |
| Dough weight 950gram | | | | | | |

The results show that increasing the amount of (alpha lactalbumin + beta lactoglobulin) in relation to CMP beyond a certain level, leads to loss of the CMP softening effect.

The results show that the negative effects of the presence of alpha lactalbumin/beta lactoglobulin begin to be apparent at levels of 70% - 60% CMP (30%- 40% ala+blg). However, the negative effects become clearer once the levels of alpha lactalbumin+beta lactoglobulin exceed the levels of CMP (40% CMP and 30% CMP, which correspond to 60% ala+blg and 70% ala+blg, respectively).

Thus results are seen at ratios of CMP to (alpha lactalbumin+beta lactoglobulin) of 100:0, 90:10, 80:20, 70:30, 60:40 and 50:50.

### Example 12- Doughnut mix

A mix for doughnut is prepared by providing and mixing the following ingredients.

| Ingredients | Amount (kg) |
|---|---|
| Wheat flour (12 % protein; 10 % gluten) | 100 |
| Sugar | 8 |
| Fat powder | 5 |
| Whole egg powder | 1 |
| Salt | 1 |
| Skimmed milk powder | 1 |
| Baking powder | 0.5 |
| CMP | 0.5 |
| SSL | 0.5 |
| Vanilla powder | 0.2 |

| | |
|---|---|
| CMP is provided in the form of a purified preparation (LacProdan 20). | |

### Example 13- Comparison of softness over time

A wheat flour bread for toast was prepared using Danish and Canadian wheat flour. The bread had a fixed volume. The results in Figure 10 show that increased force is required to compress the bread to a fixed distance over time (decreasing softness, indicating staling of bread). However, inclusion of CMP greatly reduces the force required as compared to the Reference bread.

| Ingredient (g) | Ref | 1% cGMP | HydroGMP | 0.50% | Manitoba |
|---|---|---|---|---|---|
| Oil | 100 | 100 | 100 | 100 | 100 |
| Danish bread Flour | 2000 | 2000 | 2000 | | |
| Sugar | 100 | 100 | 100 | 100 | 100 |
| salt | 40 | 40 | 40 | 40 | 40 |
| Dry yeast | 50 | 50 | 50 | 50 | 50 |
| Water | 1100 | 1120 | 1120 | 1120 | 1120 |
| Manitoba flour | | | | 2000 | 2000 |
| CMP | | 20 | | | 20 |
| Hydro CMP | | | | | |
| Calcium Propionate | 5 | 5 | 5 | 5 | 5 |
| Mono | 10 | 10 | 10 | 10 | 10 |

| | | | | | |
|---|---|---|---|---|---|
| Ref: Reference bread, baked using Danish bread flour, without CMP 1% cGMP: Bread with 1% CMP Hydro GMP: Made with Deglycoslylated CMP 0,50%: Control bread, made using Manitoba flour and no CMP Manitoba: Bread made using Manitoba flour and with 1% CMP 1% cGMP (right-most columns): Bread made using Manitoba flour and 1 % CMP. | | | | | |

The first (left) column in each triplet is measurement taken day 2, the second columns is the measurement taken on day 3, and the final (right) is the measurement taken on day 12.

### Example 14- Lacprodan ® CGMP-10.

Lacprodan ® CGMP-10 has a high content of CMP, and may be used as a source of CMP in the present invention.

**Table 7: Lacprodan ® CGMP-10 Chemical Specification**

| Component | Percentage by dry weight |
|---|---|
| Protein (Nx 6.38) as is | 80-84 (Min/max) |
| Protein (Nx6.38) d.m. | 83-87 |
| Lactose | 2.0 (max.) |
| Fat | 0.5 (max) |
| Ash | 6.5 (level) |
| Moisture | 5.0 (max) |
| CMP content (of protein) | 75-85 |
| Sialic acids | 6 (Level) |

| | |
|---|---|
| Source: PI Lacprodan ® CGMP-10 28-02-13 0062, available online at www.arlafoodsingredients.com. | |

### Example 15- Lacprodan ® CGMP-10

Lacprodan ® CGMP-10 may be prepared according to the methods described in patent application WO9929183.

### Example 16 - Hamburger buns

The table below gives an example of a recipe suitable for making hamburger buns.

The reference recipe may include from 1 to 3 g of one or more dough improvers (excluding CMP), such as one or more of ascorbic acid, bromate, sodium caseinate, calcium caseinate, sodium stearoyl lactylate (SSL), calcium stearoyl lactylate (CSL), ethoxylated mono- and diglycerides (EMG), polysorbates (PS), succinylated monoglycerides (SMG), DATEM, S500 Puratos; and enzymes such as one or more of amylase, glucose oxidase, lipase, lipoxygenase, hexose oxidase and xylanase

| INGREDIENTS (g) | REF | CMP |
|---|---|---|
| Oil/shortening | 60 | 60 |
| Wheat Flour (12 % protein; 10 % gluten) | 2000 | 2000 |
| Sugar | 60 | 60 |
| Salt | 30 | 30 |
| Yeast | 100 | 100 |
| Water | 1100 | 1100 |
| Calcium propionate | 2 | 2 |
| Dough Improver | 1 to 3 | |
| CMP | | 10 |

### Example 17- Bread for toast

The table below gives an example of a recipe suitable for making hamburger buns.

The reference recipe may include from 1 to 3 gs of one or more dough improvers (excluding CMP), such as those mentioned in Example 16.

| INGREDIENTS (g) | REF | CMP |
|---|---|---|
| Oil/shortening | 80 | 80 |
| Wheat Flour (12 % protein; 10 % gluten) | 1200 | 1200 |
| Sugar | 100 | 100 |
| Salt | 35 | 35 |
| Dry yeast | 50 | 50 |
| Water | 500 | 500 |
| Calcium propionate | 2 | 2 |
| Dough Improver | 1 to 3 | |
| CMP | | 10 |
| Weight | 1450 | 1450 |

### EMBODIMENTS

1. A method of stabilizing a gluten network in a food product comprising
   i) providing one or more ingredients to be used in the manufacture of said food product, wherein at least one ingredient comprises gluten,
   ii) adding casein glycomacropeptide (CMP) to said one or more ingredients,
      wherein at least one of the ingredients is an aqueous ingredient and/or CMP is provided as an aqueous ingredient,
      and mixing,
      thereby forming a food product comprising a stabilized gluten network.
2. The method according to embodiment 1, wherein said CMP is added in an amount of at least 0.01 g CMP/g gluten.
3. The method according to embodiment 1, wherein said CMP is added in an amount of from 0.01 to 0.5 g CMP/g gluten.
4. The method according to embodiment 1 to 3, wherein said CMP is added in an amount of from 0.2 to 10% (w/w) of dry ingredients.
5. The method according to any of the preceding embodiments, wherein said one or more ingredient comprises one or more flours.
6. The method according to embodiment 5, wherein the one or more flour is selected from the group consisting of wheat, triticale, rye, barley, oat, buckwheat, spelt, millet, quinoa, soya, corn, rice, potato, almond, hazelnut, coconut, Graham's flour and combinations thereof.
7. The method according to embodiment 5 or 6, wherein said flour is wheat flour.
8. The method according to any one of embodiments 5-7, wherein said flour has a protein content, which is within the range of 5%-18%.
9. The method according to embodiment 8 wherein said flour has a protein content, which is within the range of 5% to 9%.
10.The method according to embodiment 8 wherein said flour has a protein content, which is within the range of 10% to 18%.
11.The method according to embodiment 7 or 10, wherein said wheat flour is selected from the group consisting of type T550, Danish wheat bread flour, Reform flour, Manitoba and combinations thereof.
12.The method according to any of the preceding embodiments, wherein one or more of said ingredients is selected from the group consisting of a gluten-free flour, a dough improver, an emulsifier, a flavouring agent, a colouring agent, a leavening agent.
13.The method according to embodiment 12, wherein said dough improver is selected from the group consisting of: ascorbic acid, bromate, sodium caseinate, calcium caseinate, sodium stearoyl lactylate (SSL), calcium stearoyl lactylate (CSL), ethoxylated mono- and diglycerides (EMG), polysorbates (PS), succinylated monoglycerides (SMG) and DATEM; and enzymes such as one or more of amylase, glucose oxidase, lipase, lipoxygenase, hexose oxidase and xylanase.
14.The method according to any of the preceding embodiments, wherein the ingredients comprise a flour with a gluten content within the range of 5 to 13%, a preparation of wheat gluten protein and CMP.
15.The method according to any of the preceding embodiments, wherein said mixing is performed during and/or after addition of said aqueous ingredient.
16.The method according to any of the preceding embodiments, wherein mixing is continued until optimal development.
17.The method according to any of the preceding embodiments , wherein said aqueous ingredient is selected from water, milk, whole egg, egg yolk, egg white, a milk-derived liquid such as whey, vegetable- or plant-derived juices, beer, wine and/or combinations thereof.
18.The method according to any of the preceding embodiments, wherein the food product comprises alpha lactalbumin and/or beta lactoglobulin, and wherein the ratio of CMP to (the combined amounts of alpha lactalbumin and beta lactoglobulin) in the food product is in the range from 90:10 to 30:70, such as 80:20 to 30:70, 70:30 to 30:70.
19.The method according to any of the preceding embodiments, wherein said CMP is provided in the form of a whey fraction where CMP makes up at least 50% of the total protein content of said fraction by dry weight
20.The method according to embodiment 19, wherein the amounts of alpha lactalbumin and beta lactoglobulin together make up less than 50% of the total protein content of said fraction by weight.
21.The method according to any one of the preceding embodiments, wherein said product comprising a stabilised gluten network is divided, shaped, leavened and/or proved.
22.The method according to any one of the preceding embodiments, comprising subjecting said product comprising a gluten network to heat treatment/baking.
23.The method according to embodiment 22 wherein said heat treatment is at temperature within the range of 100-400 degrees Celsius.
24.The method according to embodiment 22 or 23, wherein said heat treatment has a duration of 45 sec -2 hours.
25.A food product comprising a stabilised gluten network and CMP, said food product being obtained when performing the method set forth in any one of embodiments 1-24.
26.A food product comprising a stabilised gluten network, CMP, alpha lactalbumin and beta lactoglobulin, said food product being obtained when performing the method set forth in any one of embodiments 1-24, and wherein the ratio of CMP to (the combined amount of alpha lactalbumin together with beta lactoglobulin) in the food product is in the range from 90:10 to 50:50.
27.A composition for use in the method according to any one of embodiments 1 to 24, said composition comprising
   i) at least one ingredient comprising gluten and
   ii) at least one ingredient comprising CMP, wherein said composition comprises CMP in an amount of from 0.01 to 0.5 g CMP/g gluten.
28.The composition according to embodiment 27, said composition comprising from 0 to 0.25 g alpha-lactalbumin and beta lactoglobulin together per g/ gluten.
29.The composition according to any one of embodiments 27- 28, said composition being a semi-manufactured food.
30.The composition according to any of embodiments 27- 29, wherein said ingredients are dry ingredients.
31.The composition according to any one of embodiments 27-30, wherein said CMP is present in an amount of from 0.2 to 20% (w/w) of the dry weight.
32.The composition according to any one of embodiments 27 to 31, which comprises at least one flour.
33.The composition according to embodiment 32, wherein the flour is selected from the group consisting of wheat, triticale, rye, barley, oat, buckwheat, spelt, millet, quinoa, soya, corn, rice, potato, almond, hazelnut and coconut.
34.The composition according to embodiment 32 or 33, wherein said flour is wheat flour.
35.The composition according to any one of embodiments 32-34, wherein the one or more flours have an average gluten content of from 5 to 13% by weight.
36.The composition according to any one of embodiments 32 to 35, wherein said wheat flour is selected from the group consisting of Type 550, Danish wheat bread flour, Reform wheat flour, Manitova and combinations thereof.
37.The composition according to any one of embodiments 27 to 36, said composition comprising one or more ingredients, which are selected from the group consisting of a dough improver which is not CMP, an emulsifier, a flavouring agent, a colouring agent, a preparation of gluten, malted wheat flour, leavening agent.
38.The composition according to embodiment 37, wherein said dough improver which is not CMP, is selected from the group consisting of: ascorbic acid, bromate, sodium caseinate, calcium caseinate, sodium stearoyl lactylate (SSL), calcium stearoyl lactylate (CSL), ethoxylated mono- and diglycerides (EMG), polysorbates (PS), succinylated monoglycerides (SMG) DATEM and one or more of amylase, glucose oxidase, lipase, lipoxygenase, hexose oxidase and xylanase.
39.The composition according to any one of embodiments 27- 37, wherein the composition does not contain any dough improver other than CMP..
40.The composition according to any one of embodiments 27- 39, said composition comprising one or more aqueous ingredients.
41.The food product according to embodiment 25 or 26, being a food product selected from the group consisting of a bakery food product, a dough, a pasta and any combinations thereof.
42.The food product according to embodiment 41, said food product being a dough, wherein CMP is present in an amount 0.01-0.5 g CMP/g gluten.
43.The food product according to any one of embodiments 41 to 42, said food product comprising one or more leavening agents selected from the group consisting of chemical, and biological leavening agents; and/or has been mechanically leavened.
44.The food product according to any of embodiments 42 or 43, said food product being a dough consisting of a fat source, wheat flour, sugar, salt, yeast, water, calcium propionate, and CMP, wherein CMP is present in an amount of 0.01 g CMP/g gluten.
45.The food product according to embodiment 41, wherein the food product is a bakery food product and CMP is present in an amount of from 0.01 to 0.5 g CMP/g gluten .
46.The food product according to embodiment 45, wherein said composition is a bread.
47. The food product according to embodiment 46, said composition being a bread consisting of a fat source, wheat flour, sugar, salt, yeast, water, calcium propionate, and CMP, wherein CMP is present in an amount of 0.01 g CMP/g gluten.
48.The food product according to embodiment 41, wherein the food product is pasta.
49.The use of casein glycomacropeptide (CMP) to stabilise a gluten network in a food product.
50.The use of a composition comprising at least 0.01 g CMP to stabilise a gluten network in a food product.
51.The use of a composition comprising CMP, alpha lactalbumin and/or beta lactoglobulin to stabilise a gluten network in a food product, wherein the alpha lactalbumin and/or beta lactoglobulin together make up less than 50% of the CMP by weight.
52.The use of a composition comprising CMP according to any one of embodiments 27 to 40 to stabilise a gluten network in a food product.
53.A method of preparing a CMP-rich whey fraction suitable for use in method according to embodiments 1 to 24, the method comprising the steps of
   i) providing a milk product comprising micellar casein,
   ii) subjecting the milk product of step i) to microfiltration, yielding a micellar casein isolate,
   iii) Optionally adding cream, vegetable oil and/or protein to the micellar casein isolate,
   iv) using the micellar casein isolate in a cheesemaking method, wherein the micellar casein is cleaved by rennet and a curd is allowed to form,
   v) draining and recovering the whey from the curd formed in the cheesemaking process, which is a CMP-rich whey fraction.
54.The use of a CMP-rich whey fraction obtained or obtainable according to the method of embodiment 53 in a method of stabilizing a gluten network in a food product comprising according to any one of embodiments 1 to 24.

## Claims

1. A method of stabilizing a gluten network in a food product comprising
i) providing one or more ingredients to be used in the manufacture of said food product, wherein at least one ingredient comprises gluten,
ii) adding casein glycomacropeptide (CMP) to said one or more ingredients,
wherein at least one of the ingredients is an aqueous ingredient and/or CMP is provided as an aqueous ingredient,
and mixing,
thereby forming a food product comprising a stabilized gluten network.

2. The method according to claim 1, wherein said CMP is added in an amount of at least 0.01 g CMP/g gluten.

3. The method according to claim 1 or 2, wherein said CMP is added in an amount of from 0.01 to 0.45 g CMP/g gluten.

4. The method according to any of the preceding claims, wherein said one or more ingredient comprises one or more flours.

5. The method according to claim 4, wherein said flour is wheat flour.

6. The method according to any of the preceding claims, wherein said aqueous ingredient is selected from water, milk, whole egg, egg yolk, egg white, a milk-derived liquid such as whey, vegetable- or plant-derived juices, beer, wine and/or combinations thereof.

7. The method according to any of the preceding claims, wherein the food product comprises alpha lactalbumin and/or beta lactoglobulin, and wherein the ratio of CMP to (the combined amounts of alpha lactalbumin and beta lactoglobulin) in the food product is in the range from 90:10 to 30:70, such as 80:20 to 30:70, 70:30 to 30:70.

8. A food product comprising a stabilised gluten network and CMP, said food product being obtained when performing the method set forth in any one of preceding claims, said food product comprising from 0.01 to 0.45 g CMP/g gluten.

9. A food product comprising a stabilised gluten network, CMP, alpha lactalbumin and beta lactoglobulin, said food product being obtained when performing the method set forth in any one of claims 1-7, and wherein the ratio of CMP to (the combined amount of alpha lactalbumin together with beta lactoglobulin) in the food product is in the range from 90:10 to 50:50.

10. A composition for use in the method according to any one of claims 1 to 7, said composition comprising
i) at least one ingredient comprising gluten and
ii) at least one ingredient comprising CMP, wherein said composition comprises CMP in an amount of from 0.01 to 0.45 g CMP/g gluten.

11. The composition according to claim 10, said composition comprising from 0 to 0.25 g alpha-lactalbumin and beta lactoglobulin together per g/ gluten.

12. The food product according to claim 8 or 9, being a food product selected from the group consisting of a bakery food product, a dough, a pasta and any combinations thereof.

13. The food product according to claim 12, said food product being a dough, wherein CMP is present in an amount 0.01-0.45 g CMP/g gluten.

14. The food product according to claim 12, wherein the food product is a bakery food product and CMP is present in an amount of from 0.01 to 0.45 g CMP/g gluten.

15. The food product according to claim 14, wherein said composition is a bread.

16. The food product according to claim 12, wherein the food product is pasta.

17. The use of casein glycomacropeptide (CMP) to stabilise a gluten network in a food product.

18. The use of a composition comprising CMP, alpha lactalbumin and/or beta lactoglobulin to stabilise a gluten network in a food product, wherein the alpha lactalbumin and/or beta lactoglobulin together make up less than 50% of the CMP by weight.

## Patentansprüche

1. Verfahren zum Stabilisieren eines Glutennetzwerkes in einem Lebensmittelprodukt, umfassend:
i) Bereitstellen von einer oder mehreren Zutaten, die bei der Herstellung des Lebensmittelprodukts zu verwenden sind, wobei zumindest eine Zutat Gluten umfasst,
ii) Hinzufügen von Caseinglycomakropeptid (CMP) zu der einen oder den mehreren Zutaten,
wobei zumindest eine der Zutaten eine wässrige Zutat ist und/oder CMP als eine wässrige Zutat bereitgestellt wird,
und Mischen,
wodurch ein Lebensmittelprodukt gebildet wird, das ein stabilisiertes Glutennetzwerk umfasst.

2. Verfahren nach Anspruch 1, wobei das CMP in einer Menge von zumindest 0,01 g CMP/g Gluten hinzugefügt wird.

3. Verfahren nach Anspruch 1 oder 2, wobei das CMP in einer Menge von 0,01 bis 0,45 g CMP/g Gluten hinzugefügt wird.

4. Verfahren nach einem der vorstehenden Ansprüche, wobei die eine oder die mehreren Zutaten ein oder mehrere Mehle umfassen.

5. Verfahren nach Anspruch 4, wobei das Mehl Weizenmehl ist.

6. Verfahren nach einem der vorstehenden Ansprüche, wobei die wässrige Zutat aus Wasser, Milch, Vollei, Eidotter, Eiklar, einer von Milch abgeleiteten Flüssigkeit wie etwa Molke, von Gemüse oder Pflanzen abgeleiteten Säften, Bier, Wein und/oder Kombinationen davon ausgewählt ist.

7. Verfahren nach einem der vorstehenden Ansprüche, wobei das Lebensmittelprodukt Alpha-Lactalbumin und/oder Beta-Lactoglobulin umfasst, und wobei das Verhältnis von CMP zu (den kombinierten Mengen von Alpha-Lactalbumin und Beta-Lactoglobulin) in dem Lebensmittelprodukt in dem Bereich von 90:10 bis 30:70, wie etwa 80:20 bis 30:70, 70:30 bis 30:70, liegt.

8. Lebensmittelprodukt, umfassend ein stabilisiertes Glutennetzwerk und CMP, wobei das Lebensmittelprodukt erlangt wird, wenn das Verfahren durchgeführt wird, das in einem der vorstehenden Ansprüche dargelegt ist, wobei das Lebensmittelprodukt von 0,01 bis 0,45 g CMP/g Gluten umfasst.

9. Lebensmittelprodukt, umfassend ein stabilisiertes Glutennetzwerk, CMP, Alpha-Lactalbumin und Beta-Lactoglobulin, wobei das Lebensmittelprodukt erlangt wird, wenn das Verfahren durchgeführt wird, das in einem der Ansprüche 1-7 dargelegt ist, und wobei das Verhältnis von CMP zu (der kombinierten Menge von Alpha-Lactalbumin zusammen mit Beta-Lactoglobulin) in dem Lebensmittelprodukt in dem Bereich von 90:10 bis 50:50 liegt.

10. Zusammensetzung zur Verwendung in dem Verfahren nach einem der Ansprüche 1 bis 7, wobei die Zusammensetzung Folgendes umfasst:
i) zumindest eine Zutat, die Gluten umfasst, und
ii) zumindest eine Zutat, die CMP umfasst, wobei die Zusammensetzung CMP in einer Menge von 0,01 bis 0,45 g CMP/g Gluten umfasst.

11. Zusammensetzung nach Anspruch 10, wobei die Zusammensetzung von 0 bis 0,25 g Alpha-Lactalbumin und Beta-Lactoglobulin zusammen pro g Gluten umfasst.

12. Lebensmittelprodukt nach Anspruch 8 oder 9, das ein Lebensmittelprodukt ausgewählt aus der Gruppe bestehend aus einem Backwarenlebensmittelprodukt, einem Teig, einer Pasta und einer beliebigen Kombination davon ist.

13. Lebensmittelprodukt nach Anspruch 12, wobei das Lebensmittelprodukt ein Teig ist, wobei CMP in einer Menge von 0,01-0,45 g CMP/g Gluten vorhanden ist.

14. Lebensmittelprodukt nach Anspruch 12, wobei das Lebensmittelprodukt ein Backwarenlebensmittelprodukt ist, und CMP in einer Menge von 0,01-0,45 g CMP/g Gluten vorhanden ist.

15. Lebensmittelprodukt nach Anspruch 14, wobei die Zusammensetzung ein Brot ist.

16. Lebensmittelprodukt nach Anspruch 12, wobei das Lebensmittelprodukt Pasta ist.

17. Verwendung von Caseinglycomakropeptid (CMP), um ein Glutennetzwerk in einem Lebensmittelprodukt zu stabilisieren.

18. Verwendung einer Zusammensetzung umfassend CMP, Alpha-Lactalbumin und/oder Beta-Lactoglobulin, um einen Glutenverbund in einem Lebensmittelprodukt zu stabilisieren, wobei das Alpha-Lactalbumin und/oder Beta-Lactoglobulin zusammen weniger als 50 % des CMP nach Gewicht ausmachen.

## Revendications

1. Procédé de stabilisation d'un réseau de gluten dans un produit alimentaire, comprenant les étapes consistant à
i) fournir un ou plusieurs ingrédients devant être utilisés dans la fabrication dudit produit alimentaire, au moins un ingrédient comprenant du gluten,
ii) ajouter du caséine-glycomacropeptide (CMP) audit ou auxdits ingrédients,
au moins l'un des ingrédients étant un ingrédient aqueux et/ou le CMP étant fourni en tant qu'ingrédient aqueux,
et mélanger,
pour former ainsi un produit alimentaire comprenant un réseau de gluten stabilisé.

2. Procédé selon la revendication 1, dans lequel ledit CMP est ajouté à raison d'au moins 0,01 g CMP/g gluten.

3. Procédé selon la revendication 1 ou 2, dans lequel ledit CMP est ajouté à raison de 0,01 à 0,45 g CMP/g gluten.

4. Procédé selon l'une quelconque des revendications précédentes, dans lequel ledit ou lesdits ingrédients comprennent une ou plusieurs farines.

5. Procédé selon la revendication 4, dans lequel ladite farine est la farine de blé.

6. Procédé selon l'une quelconque des revendications précédentes, dans lequel ledit ingrédient aqueux est sélectionné entre : eau, lait, oeuf entier, jaune d'oeuf, blanc d'oeuf, liquide dérivé du lait tel que lactosérum, jus dérivés de légume ou de plante, bière, vin, et/ou des combinaisons de ceux-ci.

7. Procédé selon l'une quelconque des revendications précédentes, dans lequel le produit alimentaire comprend de l'alpha-lactalbumine et/ou de la bêta-lactoglobuline, et dans lequel le rapport du CMP à (quantités combinées d'alpha-lactalbumine et de bêta-lactoglobuline) dans le produit alimentaire est dans la gamme de 90:10 à 30:70, tel que 80:20 à 30:70, 70:30 à 30:70.

8. Produit alimentaire comprenant un réseau de gluten stabilisé et du CMP, ledit produit alimentaire étant obtenu lors de l'exécution du procédé défini dans l'une quelconque des revendications précédentes, ledit produit alimentaire comprenant de 0,01 à 0,45 g CMP/g gluten.

9. Produit alimentaire comprenant un réseau de gluten stabilisé, du CMP, de l'alpha-lactalbumine et de la bêta-lactoglobuline, ledit produit alimentaire étant obtenu lors de l'exécution du procédé défini dans l'une quelconque des revendications 1-7, et dans lequel le rapport du CMP à (quantité combinée de l'alpha lactalbumine avec la bêta-lactoglobuline) dans le produit alimentaire est dans la gamme de 90:10 à 50:50.

10. Composition pour utilisation dans le procédé selon l'une quelconque des revendications 1 à 7, ladite composition comprenant
i) au moins un ingrédient comprenant du gluten et
ii) au moins un ingrédient comprenant du CMP, ladite composition comprenant du CMP à raison de 0,01 à 0,45 g CMP/g gluten.

11. Composition selon la revendication 10, ladite composition comprenant de 0 à 0,25 g d'alpha-lactalbumine et de bêta-lactoglobuline combinés par g de gluten.

12. Produit alimentaire selon la revendication 8 ou 9, qui est un produit alimentaire sélectionné dans le groupe constitué de : un produit alimentaire de boulangerie, une pâte de cuisson, une pâte alimentaire et toutes combinaisons de ceux-ci.

13. Produit alimentaire selon la revendication 12, ledit produit alimentaire étant une pâte de cuisson, dans laquelle le CMP est présent à raison de 0,01-0,45 g CMP/g gluten.

14. Produit alimentaire selon la revendication 12, ledit produit alimentaire étant un produit alimentaire de boulangerie et le CMP étant présent à raison de 0,01 à 0,45 g CMP/g gluten.

15. Produit alimentaire selon la revendication 14, dans lequel ladite composition est un pain.

16. Produit alimentaire selon la revendication 12, le produit alimentaire étant une pâte alimentaire.

17. Utilisation d'un caséine-glycomacropeptide (CMP) pour stabiliser un réseau de gluten dans un produit alimentaire.

18. Utilisation d'une composition comprenant du CMP, de l'alpha-lactalbumine et/ou de la bêta-lactoglobuline pour stabiliser un réseau de gluten dans un produit alimentaire, l'alpha-lactalbumine et/ou la bêta-lactoglobuline constituant ensemble moins de 50% en poids du CMP.
